(19) Europäisches Patentamt
European Patent Office
Office européen des brevets

(11) **EP 4 715 763 A1**

(12) **EUROPEAN PATENT APPLICATION**
published in accordance with Art. 153(4) EPC

(43) Date of publication:
**25.03.2026   Bulletin 2026/13**

(21) Application number: **24825255.3**

(22) Date of filing: **19.06.2024**

(51) International Patent Classification (IPC):
*G06V 30/412* (2022.01)    *G06V 30/414* (2022.01)
*G06V 10/82* (2022.01)     *G06V 30/18* (2022.01)

(52) Cooperative Patent Classification (CPC):
**G06V 30/412; G06V 10/82; G06V 30/414;**
G06V 30/18076

(86) International application number:
**PCT/CN2024/100022**

(87) International publication number:
**WO 2024/260361 (26.12.2024 Gazette 2024/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.06.2023   CN 202310746659**

(71) Applicant: **Huawei Technologies Co., Ltd.
Shenzhen, Guangdong 518129 (CN)**

(72) Inventors:
• **PEI, Yulong
  Shenzhen, Guangdong 518129 (CN)**

• **TAO, Yao
  Shenzhen, Guangdong 518129 (CN)**
• **TANG, Wanhui
  Shenzhen, Guangdong 518129 (CN)**
• **HU, Hailin
  Shenzhen, Guangdong 518129 (CN)**
• **WANG, Yunhe
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **TABLE RECOGNITION METHOD AND RELATED DEVICE THEREFOR**

(57) This application discloses a table recognition method and a related device therefor, to correctly complete matching between a plurality of cells and a plurality of texts, so as to obtain a correct table. The method in this application includes: When table recognition needs to be performed, a target image including a to-be-recognized table may be first obtained. After the target image is obtained, the target image may be processed by using a target model, to separately obtain a plurality of cells of the table, first location information of the plurality of cells, and second location information of a plurality of separators between the plurality of cells. After the target image is obtained, text recognition may be further performed on the target image, to obtain a plurality of texts of the table and third location information of the plurality of texts. Then, fourth location information of the plurality of cells may be determined based on the second location information of the plurality of separators. Finally, the location information may be comprehensively considered, to complete matching between the plurality of cells and the plurality of texts, so as to obtain the required table.

FIG. 5

**Description**

This application claims priority to Chinese Patent Application No. 202310746659.0, filed with the China National Intellectual Property Administration on June 21, 2023 and entitled "TABLE RECOGNITION METHOD AND RELATED DEVICE THEREFOR", which is incorporated herein by reference in its entirety.

**TECHNICAL FIELD**

Embodiments of this application relate to the field of artificial intelligence (artificial intelligence, AI) technologies, and in particular, to a table recognition method and a related device therefor.

**BACKGROUND**

Table recognition is an important part in image processing, with a purpose of converting a table in an image form into a table in a text form. When a user has a table recognition requirement, an image including a to-be-recognized table can be processed by using a neural network model in an AI technology, to extract the required table from the image, so as to meet the table recognition requirement of the user.

In a related technology, a target image including a to-be-recognized table can be input to a neural network model. In this case, the neural network model can first perform preliminary processing on the target image, to obtain a feature of the target image. Then, the neural network model can perform further processing on the feature of the target image, to output a plurality of cells of the table and location information of the plurality of cells. Next, recognition can be performed on the target image, to obtain a plurality of texts of the table and location information of the plurality of texts. Finally, matching can be performed between the plurality of cells and the plurality of texts based on the location information of the cells and the location information of the texts, to obtain the required table.

In the foregoing table recognition process, only the location information of the plurality of cells output by the model is considered, and the considered factor is simple. Once the location information of the plurality of cells is insufficiently accurate, matching between the plurality of cells and the plurality of texts cannot be correctly completed, making it impossible to obtain a correct table.

**SUMMARY**

Embodiments of this application provide a table recognition method and a related device therefor, to correctly complete matching between a plurality of cells and a plurality of texts, so as to obtain a correct table and improve user experience.

A first aspect of embodiments of this application provides a table recognition method. The method includes: When table recognition needs to be performed, a target image may be first obtained. The target image includes a to-be-recognized table, and the to-be-recognized table includes a plurality of cells and a plurality of texts. Each of the plurality of cells is filled with at least one of the plurality of texts.

After the target image is obtained, the target image may be input to a target model, to perform a series of processing on the target image by using the target model, so as to separately obtain the plurality of cells of the table, first location information of the plurality of cells, and second location information of a plurality of separators between the plurality of cells. The first location information of the plurality of cells may be understood as coordinates of decoding boxes of the plurality of cells in an image coordinate system, the second location information of the plurality of separators may be understood as coordinates of pixels in the target image that are occupied by the plurality of separators in the image coordinate system, and the image coordinate system is constructed based on the target image.

After the target image is obtained, text recognition may be further directly performed on the target image, to obtain the plurality of texts of the to-be-recognized table and third location information of the plurality of texts. The third location information of the plurality of texts may be understood as coordinates of text boxes of the plurality of texts in the image coordinate system.

After the second location information of the plurality of separators is obtained, a series of processing may be performed on the second location information of the plurality of separators, to obtain fourth location information of the plurality of cells. The fourth location information of the plurality of cells may be understood as coordinates of segmentation boxes of the plurality of cells in the image coordinate system.

After the first location information of the plurality of cells, the third location information of the plurality of texts, and the fourth location information of the plurality of cells are obtained, comprehensive processing may be performed on the information, to complete matching between the plurality of cells and the plurality of texts, so as to merge the plurality of cells and the plurality of texts into the required table. So far, table recognition is completed.

It can be learned from the foregoing method that, when table recognition needs to be performed, the target image including the to-be-recognized table may be first obtained. After the target image is obtained, the target image may be input to the target model, to process the target image by using the target model, so as to separately obtain the plurality of cells of the table, the first location information of the plurality of cells, and the second location information of the plurality of separators between the plurality of cells. After the target image is obtained, text recognition may be further performed on the target image, to obtain the plurality of texts of the table and the third location information of the plurality of texts. Then, the fourth location information of the plurality of cells may be determined based on the second location information of the plurality of separators. Finally, the first location information of the plurality of cells, the third location information of the plurality of texts, and the fourth location information of the plurality of cells may be comprehensively considered, to complete matching between the plurality of cells and the plurality of texts, so as to obtain the required table. In the foregoing process, the target model includes the first location information of the plurality of cells and the third location information of the plurality of separators between the plurality of cells, and the fourth location information of the plurality of cells is calculated based on the third location information of the plurality of separators. During table recognition, the first location information of the plurality of cells that is output by the model is considered, and the fourth location information of the plurality of cells that is obtained through calculation is also considered. Considered factors are comprehensive, and even if the first location information of the plurality of cells is insufficiently accurate, the fourth location information of the plurality of cells is sufficiently accurate (because impact of the separators between the cells is considered). In this way, matching between the plurality of cells and the plurality of texts can be correctly completed, to obtain a correct table and improve user experience.

In a possible implementation, processing the target image by using the target model, to obtain the plurality of cells of the table includes: performing feature extraction on the target image by using the target model, to obtain a visual feature of the target image; and performing encoding and first decoding on the visual feature of the target image by using the target model, to obtain the plurality of cells of the table. In the foregoing implementation, after the target image is obtained, the target model may perform multi-layer feature extraction on the target image, to successively obtain an initial visual feature of the target image, an intermediate visual feature of the target image, and a final visual feature of the target image. After the initial visual feature of the target image, the intermediate visual feature of the target image, and the final visual feature of the target image are obtained, the target model may encode the final visual feature of the target image, to obtain an encoding feature of the target image. After the encoding feature of the target image is obtained, the target model may perform first decoding on the encoding feature of the target image, to obtain an HTML sequence. The HTML sequence includes the plurality of cells presented in an HTML form. In other words, the HTML sequence includes descriptions of the plurality of cells of the table.

In a possible implementation, processing the target image by using the target model, to obtain the first location information of the plurality of cells includes: performing encoding and second decoding on the visual feature of the target image by using the target model, to obtain the first location information of the plurality of cells. In the foregoing implementation, the target model may further perform second decoding (the second decoding and the first decoding are different decoding operations) on the encoding feature of the target image, to accurately obtain the first location information of the plurality of cells, namely, the coordinates of the decoding boxes of the plurality of cells in the image coordinate system.

In a possible implementation, processing the target image by using the target model, to obtain the second location information of the plurality of separators between the plurality of cells includes: performing feature fusion on visual features of the target image by using the target model, to obtain a fused feature of the target image; and performing classification on the fused feature of the target image by using the target model, to obtain the second location information of the plurality of separators between the plurality of cells. In the foregoing implementation, after a part of intermediate visual feature of the target image and the final visual feature of the target image are obtained, the target model may perform fusion on the part of intermediate visual feature of the target image and the final visual feature of the target image, to obtain the fused feature of the target image. After the fused feature of the target image is obtained, the target model may perform pixel-level classification on the fused feature of the target image, to classify all pixels in the target image into two parts. A first part of pixels are pixels occupied by the plurality of cells, and a second part of pixels are pixels occupied by the plurality of separators between the plurality of cells. Therefore, coordinates of the pixels occupied by the plurality of separators in the image coordinate system may be obtained, and the coordinates are used as the second location information of the plurality of separators. It can be learned that, the target model provided in embodiments of this application is a multi-task framework, and can predict locations of the plurality of cells of the table and also predict locations of the plurality of separators in the table.

In a possible implementation, determining the fourth location information of the plurality of cells based on the second location information includes: scaling up the second location information based on a difference between a size of the target image and a size of the fused feature of the target image, to obtain scaled-up second location information of the plurality of separators, where the size of the target image is greater than the size of the fused feature of the target image; and performing calculation on the scaled-up second location information, to obtain the fourth location information of the plurality of cells. In the foregoing implementation, after the second location information of the plurality of separators is obtained, because the size of the fused feature of the target image becomes less than the size of the target image in a process in which the target model obtains the fused feature of the target image, the second location information of the plurality of separators that is obtained based on the fused feature of the target image is also location information that is scaled down to some extent. To restore location information of the plurality of separators to conform to an actual size, the second location information of the plurality of separators may be scaled up based on the difference between the size of the target image and the size of the fused feature of the target image, to obtain the scaled-up second location information of the plurality of separators. This helps improve accuracy of the location information of the separators, to more correctly complete matching between the plurality of cells and the plurality of separators.

In a possible implementation, performing matching between the plurality of cells and the plurality of texts based on the first location information, the third location information, and the fourth location information, to obtain the table includes: obtaining a first correspondence between the plurality of cells and the first location information and a second correspondence between the plurality of texts and the third location information; performing first matching between the fourth location information and the third location information, to obtain a third correspondence between the fourth location information and the third location information; performing second matching between the fourth location information and the first location information, to obtain a fourth correspondence between the fourth location information and the first location information; and filling the plurality of cells with the plurality of texts based on the first correspondence, the second correspondence, the third correspondence, and the fourth correspondence, to obtain the table. In the foregoing implementation, the first correspondence between the plurality of cells and the first location information of the plurality of cells may be understood as a correspondence between the plurality of cells and the plurality of decoding boxes, the second correspondence between the plurality of texts and the third location information of the plurality of texts may be understood as a correspondence between the plurality of texts and the plurality of text boxes, the third correspondence between the fourth location information of the plurality of cells and the third location information of the plurality of texts may be understood as a correspondence between the plurality of text boxes and the plurality of segmentation boxes, and the fourth correspondence between the fourth location information of the plurality of cells and the first location information of the plurality of cells may be understood as a correspondence between the plurality of decoding boxes and the plurality of segmentation boxes. Therefore, the four groups of correspondences may be integrated according to the following relationship chain: the plurality of texts→the plurality of text boxes→the plurality of segmentation boxes→the plurality of decoding boxes→the plurality of cells, to finally obtain a correspondence between the plurality of cells and the plurality of texts. In this case, the plurality of cells may be accurately filled with the plurality of texts based on the correspondence, to accurately obtain the required table.

In a possible implementation, the first matching is center matching, and the second matching is Hungarian matching.

A second aspect of embodiments of this application provides a model training method. The method includes: obtaining a first image, where the first image includes a to-be-recognized first table; processing the first image by using a to-be-trained model, to obtain a plurality of first cells of the first table, fifth location information of the plurality of first cells, and sixth location information of a plurality of first separators between the plurality of first cells; and training the to-be-trained model based on the fifth location information and the sixth location information, to obtain a target model.

The target model obtained through training by using the foregoing method may be used for table recognition. Specifically, when table recognition needs to be performed, a target image including a to-be-recognized table may be first obtained. After the target image is obtained, the target image may be input to the target model, to process the target image by using the target model, so as to separately obtain a plurality of cells of the table, first location information of the plurality of cells, and second location information of a plurality of separators between the plurality of cells. After the target image is obtained, text recognition may be further performed on the target image, to obtain a plurality of texts of the table and third location information of the plurality of texts. Then, fourth location information of the plurality of cells may be determined based on the second location information of the plurality of separators. Finally, the first location information of the plurality of cells, the third location information of the plurality of texts, and the fourth location information of the plurality of cells may be comprehensively considered, to complete matching between the plurality of cells and the plurality of texts, so as to obtain the required table. In the foregoing process, the target model includes the first location information of the plurality of cells and the third location information of the plurality of separators between the plurality of cells, and the fourth location information of the plurality of cells is calculated based on the third location information of the plurality of separators. During table recognition, the first location information of the plurality of cells that is output by the model is considered, and the fourth location information of the plurality of cells that is obtained through calculation is also considered. Considered factors are comprehensive, and even if the first location information of the plurality of cells is insufficiently accurate, the fourth location information of the plurality of cells is sufficiently accurate (because impact of the separators between the cells is considered). In this way, matching between the plurality of cells and the plurality of texts can be correctly completed, to obtain a correct table and improve user experience.

In a possible implementation, the method further includes: obtaining a second image, where the second image includes a to-be-recognized second table; processing the second image by using a to-be-trained backbone network and a to-be-trained segmentation network, to obtain seventh location information of a plurality of second separators between a plurality of second cells of the second table; training the to-be-trained backbone network based on the seventh location information, to obtain a pre-trained backbone network; and constructing the to-be-trained model based on the pre-trained backbone network and the to-be-trained segmentation network.

In a possible implementation, the method further includes: obtaining a second image and a third image, where the second image includes a to-be-recognized second table, and the third image includes a to-be-recognized third table; processing the second image and the third image by using a to-be-trained backbone network, to obtain a visual feature of the second image and a visual feature of the third image; training the to-be-trained backbone network based on the visual feature of the second image and the visual feature of the third image, to obtain a pre-trained backbone network; and constructing the to-be-trained model based on the pre-trained backbone network.

In a possible implementation, the second image and the third image are from a same image, and the second table and the third table are from a same table.

In a possible implementation, processing the first image by using the to-be-trained model, to obtain the plurality of first cells of the first table includes: performing feature extraction on the first image by using the to-be-trained model, to obtain a visual feature of the first image; and performing encoding and first decoding on the visual feature of the first image by using the to-be-trained model, to obtain the plurality of first cells of the first table.

In a possible implementation, processing the first image by using the to-be-trained model, to obtain the fifth location information of the plurality of first cells includes: performing encoding and second decoding on the visual feature of the first image by using the to-be-trained model, to obtain the fifth location information of the plurality of first cells.

In a possible implementation, processing the first image by using the to-be-trained model, to obtain the sixth location information of the plurality of first separators between the plurality of first cells includes: performing feature fusion on visual features of the first image by using the to-be-trained model, to obtain a fused feature of the first image; and performing classification on the fused feature of the first image by using the to-be-trained model, to obtain the sixth location information of the plurality of first separators between the plurality of first cells.

A third aspect of embodiments of this application provides a table recognition apparatus. The apparatus includes: an obtaining module, configured to obtain a target image, where the target image includes a to-be-recognized table; a processing module, configured to process the target image by using a target model, to obtain a plurality of cells of the table, first location information of the plurality of cells, and second location information of a plurality of separators between the plurality of cells; a recognition module, configured to perform text recognition on the target image, to obtain a plurality of texts of the table and third location information of the plurality of texts; a determining module, configured to determine fourth location information of the plurality of cells based on the second location information; and a matching module, configured to perform matching between the plurality of cells and the plurality of texts based on the first location information, the third location information, and the fourth location information, to obtain the table.

It can be learned from the foregoing apparatus that, when table recognition needs to be performed, the target image including the to-be-recognized table may be first obtained. After the target image is obtained, the target image may be input to the target model, to process the target image by using the target model, so as to separately obtain the plurality of cells of the table, the first location information of the plurality of cells, and the second location information of the plurality of separators between the plurality of cells. After the target image is obtained, text recognition may be further performed on the target image, to obtain the plurality of texts of the table and the third location information of the plurality of texts. Then, the fourth location information of the plurality of cells may be determined based on the second location information of the plurality of separators. Finally, the first location information of the plurality of cells, the third location information of the plurality of texts, and the fourth location information of the plurality of cells may be comprehensively considered, to complete matching between the plurality of cells and the plurality of texts, so as to obtain the required table. In the foregoing process, the target model includes the first location information of the plurality of cells and the third location information of the plurality of separators between the plurality of cells, and the fourth location information of the plurality of cells is calculated based on the third location information of the plurality of separators. During table recognition, the first location information of the plurality of cells that is output by the model is considered, and the fourth location information of the plurality of cells that is obtained through calculation is also considered. Considered factors are comprehensive, and even if the first location information of the plurality of cells is insufficiently accurate, the fourth location information of the plurality of cells is sufficiently accurate (because impact of the separators between the cells is considered). In this way, matching between the plurality of cells and the plurality of texts can be correctly completed, to obtain a correct table and improve user experience.

In a possible implementation, the processing module is configured to: perform feature extraction on the target image by using the target model, to obtain a visual feature of the target image; and perform encoding and first decoding on the visual feature of the target image by using the target model, to obtain the plurality of cells of the table.

In a possible implementation, the processing module is configured to perform encoding and second decoding on the visual feature of the target image by using the target model, to obtain the first location information of the plurality of cells.

In a possible implementation, the processing module is configured to: perform feature fusion on visual features of the target image by using the target model, to obtain a fused feature of the target image; and perform classification on the fused feature of the target image by using the target model, to obtain the second location information of the plurality of separators between the plurality of cells.

In a possible implementation, the determining module is configured to: scale up the second location information based on a difference between a size of the target image and a size of the fused feature of the target image, to obtain scaled-up second location information of the plurality of separators, where the size of the target image is greater than the size of the fused feature of the target image; and perform calculation on the scaled-up second location information, to obtain the fourth location information of the plurality of cells.

In a possible implementation, the matching module is configured to: obtain a first correspondence between the plurality of cells and the first location information and a second correspondence between the plurality of texts and the third location information; perform first matching between the fourth location information and the third location information, to obtain a third correspondence between the fourth location information and the third location information; perform second matching between the fourth location information and the first location information, to obtain a fourth correspondence between the fourth location information and the first location information; and fill the plurality of cells with the plurality of texts based on the first correspondence, the second correspondence, the third correspondence, and the fourth correspondence, to obtain the table.

In a possible implementation, the first matching is center matching, and the second matching is Hungarian matching.

A fourth aspect of embodiments of this application provides a model training apparatus. The apparatus includes: an obtaining module, configured to obtain a first image, where the first image includes a to-be-recognized first table; a processing module, configured to process the first image by using a to-be-trained model, to obtain a plurality of first cells of the first table, fifth location information of the plurality of first cells, and sixth location information of a plurality of first separators between the plurality of first cells; and a training module, configured to train the to-be-trained model based on the fifth location information and the sixth location information, to obtain a target model.

The target model obtained through training by using the foregoing apparatus may be used for table recognition. Specifically, when table recognition needs to be performed, a target image including a to-be-recognized table may be first obtained. After the target image is obtained, the target image may be input to the target model, to process the target image by using the target model, so as to separately obtain a plurality of cells of the table, first location information of the plurality of cells, and second location information of a plurality of separators between the plurality of cells. After the target image is obtained, text recognition may be further performed on the target image, to obtain a plurality of texts of the table and third location information of the plurality of texts. Then, fourth location information of the plurality of cells may be determined based on the second location information of the plurality of separators. Finally, the first location information of the plurality of cells, the third location information of the plurality of texts, and the fourth location information of the plurality of cells may be comprehensively considered, to complete matching between the plurality of cells and the plurality of texts, so as to obtain the required table. In the foregoing process, the target model includes the first location information of the plurality of cells and the third location information of the plurality of separators between the plurality of cells, and the fourth location information of the plurality of cells is calculated based on the third location information of the plurality of separators. During table recognition, the first location information of the plurality of cells that is output by the model is considered, and the fourth location information of the plurality of cells that is obtained through calculation is also considered. Considered factors are comprehensive, and even if the first location information of the plurality of cells is insufficiently accurate, the fourth location information of the plurality of cells is sufficiently accurate (because impact of the separators between the cells is considered). In this way, matching between the plurality of cells and the plurality of texts can be correctly completed, to obtain a correct table and improve user experience.

In a possible implementation, the apparatus further includes: a construction module, configured to: obtain a second image, where the second image includes a to-be-recognized second table; process the second image by using a to-be-trained backbone network and a to-be-trained segmentation network, to obtain seventh location information of a plurality of second separators between a plurality of second cells of the second table; train the to-be-trained backbone network based on the seventh location information, to obtain a pre-trained backbone network; and construct the to-be-trained model based on the pre-trained backbone network and the to-be-trained segmentation network.

In a possible implementation, the apparatus further includes: a construction module, configured to: obtain a second image and a third image, where the second image includes a to-be-recognized second table, and the third image includes a to-be-recognized third table; process the second image and the third image by using a to-be-trained backbone network, to obtain a visual feature of the second image and a visual feature of the third image; train the to-be-trained backbone network based on the visual feature of the second image and the visual feature of the third image, to obtain a pre-trained backbone network; and construct the to-be-trained model based on the pre-trained backbone network.

In a possible implementation, the second image and the third image are from a same image, and the second table and the third table are from a same table.

In a possible implementation, the processing module is configured to: perform feature extraction on the first image by using the to-be-trained model, to obtain a visual feature of the first image; and perform encoding and first decoding on the visual feature of the first image by using the to-be-trained model, to obtain the plurality of first cells of the first table.

In a possible implementation, the processing module is configured to perform encoding and second decoding on the visual feature of the first image by using the to-be-trained model, to obtain the fifth location information of the plurality of first cells.

In a possible implementation, the processing module is configured to: perform feature fusion on visual features of the first image by using the to-be-trained model, to obtain a fused feature of the first image; and perform classification on the fused feature of the first image by using the to-be-trained model, to obtain the sixth location information of the plurality of first separators between the plurality of first cells.

A fifth aspect of embodiments of this application provides a table recognition apparatus. The apparatus includes a memory and a processor, the memory stores code, the processor is configured to execute the code, and when the code is executed, the table recognition apparatus performs the method according to the first aspect or any one of the possible implementations of the first aspect.

A sixth aspect of embodiments of this application provides a model training apparatus. The apparatus includes a memory and a processor, the memory stores code, the processor is configured to execute the code, and when the code is executed, the model training apparatus performs the method according to the second aspect or any one of the possible implementations of the second aspect.

A seventh aspect of embodiments of this application provides a circuit system. The circuit system includes a processing circuit. The processing circuit is configured to perform the method according to the first aspect, any one of the possible implementations of the first aspect, the second aspect, or any one of the possible implementations of the second aspect.

An eighth aspect of embodiments of this application provides a chip system. The chip system includes a processor, configured to invoke a computer program or computer instructions stored in a memory, so that the processor performs the method according to the first aspect, any one of the possible implementations of the first aspect, the second aspect, or any one of the possible implementations of the second aspect.

In a possible implementation, the processor is coupled to the memory through an interface.

In a possible implementation, the chip system further includes a memory. The memory stores a computer program or computer instructions.

A ninth aspect of embodiments of this application provides a computer storage medium. The computer storage medium stores a computer program. When the program is executed by a computer, the computer is enabled to implement the method according to the first aspect, any one of the possible implementations of the first aspect, the second aspect, or any one of the possible implementations of the second aspect.

A tenth aspect of embodiments of this application provides a computer program product. The computer program product stores instructions. When the instructions are executed by a computer, the computer is enabled to implement the method according to the first aspect, any one of the possible implementations of the first aspect, the second aspect, or any one of the possible implementations of the second aspect.

In embodiments of this application, when table recognition needs to be performed, a target image including a to-be-recognized table may be first obtained. After the target image is obtained, the target image may be input to a target model, to process the target image by using the target model, so as to separately obtain a plurality of cells of the table, first location information of the plurality of cells, and second location information of a plurality of separators between the plurality of cells. After the target image is obtained, text recognition may be further performed on the target image, to obtain a plurality of texts of the table and third location information of the plurality of texts. Then, fourth location information of the plurality of cells may be determined based on the second location information of the plurality of separators. Finally, the first location information of the plurality of cells, the third location information of the plurality of texts, and the fourth location information of the plurality of cells may be comprehensively considered, to complete matching between the plurality of cells and the plurality of texts, so as to obtain the required table. In the foregoing process, the target model includes the first location information of the plurality of cells and the third location information of the plurality of separators between the plurality of cells, and the fourth location information of the plurality of cells is calculated based on the third location information of the plurality of separators. During table recognition, the first location information of the plurality of cells that is output by the model is considered, and the fourth location information of the plurality of cells that is obtained through calculation is also considered. Considered factors are comprehensive, and even if the first location information of the plurality of cells is insufficiently accurate, the fourth location information of the plurality of cells is sufficiently accurate (because impact of the separators between the cells is considered). In this way, matching between the plurality of cells and the plurality of texts can be correctly completed, to obtain a correct table and improve user experience.

**BRIEF DESCRIPTION OF DRAWINGS**

FIG. 1 is a diagram of a structure of an artificial intelligence main framework;
FIG. 2a is a diagram of a structure of a table recognition system according to an embodiment of this application;
FIG. 2b is a diagram of another structure of a table recognition system according to an embodiment of this application;
FIG. 2c is a diagram of a related device for table recognition according to an embodiment of this application;
FIG. 3 is a diagram of an architecture of a system 100 according to an embodiment of this application;
FIG. 4 is a diagram of a structure of a target model according to an embodiment of this application;
FIG. 5 is a schematic flowchart of a table recognition method according to an embodiment of this application;
FIG. 6 is a diagram of a structure of a target model according to an embodiment of this application;
FIG. 7 is a diagram of a decoding box according to an embodiment of this application;
FIG. 8 is a diagram of a segmentation box according to an embodiment of this application;
FIG. 9 is a schematic flowchart of a model training method according to an embodiment of this application;
FIG. 10 is a diagram of a framework of segmentation pre-training according to an embodiment of this application;
FIG. 11 is a diagram of separator enhancement according to an embodiment of this application;
FIG. 12 is a diagram of a framework of self-supervised pre-training according to an embodiment of this application;
FIG. 13 is a diagram of a structure of a table recognition apparatus according to an embodiment of this application;
FIG. 14 is a diagram of a structure of a model training apparatus according to an embodiment of this application;
FIG. 15 is a diagram of a structure of an execution device according to an embodiment of this application;
FIG. 16 is a diagram of a structure of a training device according to an embodiment of this application; and
FIG. 17 is a diagram of a structure of a chip according to an embodiment of this application.

**DESCRIPTION OF EMBODIMENTS**

Embodiments of this application provide a table recognition method and a related device therefor, to correctly complete matching between a plurality of cells and a plurality of texts, so as to obtain a correct table and improve user experience.

In the specification, claims, and accompanying drawings of this application, the terms "first", "second", and the like are intended to distinguish between similar objects but do not necessarily indicate a specific sequence or order. It should be understood that terms used in such a way are interchangeable in proper circumstances, which is merely a distinguishing manner that is used when objects having a same attribute are described in embodiments of this application. In addition, the terms "include", "have", and any other variants thereof mean to cover a non-exclusive inclusion, so that a process, method, system, product, or device that includes a series of units is not necessarily limited to these units, but may include another unit not expressly listed or inherent to such a process, method, product, or device.

Table recognition is an important part in image processing, with a purpose of converting a table in an image form into a table in a text form. When a user has a table recognition requirement, an image including a to-be-recognized table can be processed by using a neural network model in an AI technology, to extract the required table from the image, so as to meet the table recognition requirement of the user. For example, an enterprise accumulates a large quantity of images containing tables such as contracts, delivery notes, and receipts. With the help of a neural network model, the enterprise can efficiently extract tables such as contracts, delivery notes, and receipts from these images.

In a related technology, a target image including a to-be-recognized table can be input to a neural network model. In this case, the neural network model can first perform preliminary processing on the target image, to obtain a feature of the target image. Then, the neural network model can perform further processing on the feature of the target image, to output a plurality of cells of the table and location information of the plurality of cells. Next, text recognition (optical character recognition, OCR) can be performed on the target image, to obtain a plurality of texts of the table and location information of the plurality of texts. Finally, matching can be performed between the plurality of cells and the plurality of texts based on a relationship between the location information of the cells and the location information of the texts, to obtain the required table.

In the foregoing table recognition process, only the location information of the plurality of cells output by the model is considered, and the considered factor is simple. Once the location information of the plurality of cells is insufficiently accurate, matching between the plurality of cells and the plurality of texts cannot be correctly completed (for example, locations of some cells are not correct, and consequently, these cells shift, and texts that should be accommodated in these cells are accommodated in other cells), making it impossible to obtain a correct table and degrading user experience.

To resolve the foregoing problem, embodiments of this application provide a table recognition method. The method may be implemented with reference to an artificial intelligence (artificial intelligence, AI) technology. The AI technology is a technical discipline that simulates, extends, and expands human intelligence by using a digital computer or a machine controlled by a digital computer. The AI technology obtains an optimal result by perceiving an environment, obtaining knowledge, and using the knowledge. In other words, the artificial intelligence technology is a branch of computer science, and attempts to understand essence of intelligence and produce a new intelligent machine that can react in a manner similar to human intelligence. Using artificial intelligence for data processing is a common application of artificial intelligence.

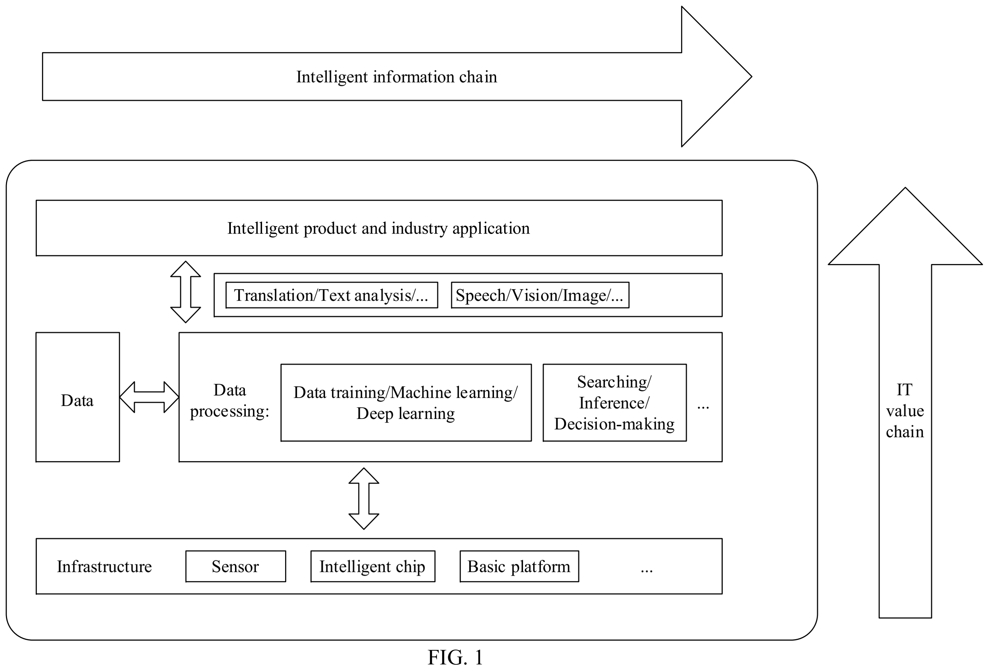

An overall working procedure of an artificial intelligence system is first described. FIG. 1 is a diagram of a structure of an artificial intelligence main framework. The following describes the artificial intelligence main framework from two dimensions: an "intelligent information chain" (horizontal axis) and an "IT value chain" (vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects value brought by artificial intelligence to the information technology industry from an underlying infrastructure and information (technology providing and processing implementation) of artificial intelligence to an industrial ecological process of a system.

(1) Infrastructure

The infrastructure provides computing capability support for the artificial intelligence system, implements communication with the external world, and implements support by using a basic platform. A sensor is used to communicate with the outside. A computing capability is provided by an intelligent chip (a hardware acceleration chip such as a CPU, an NPU, a GPU, an ASIC, or an FPGA). The basic platform includes related platforms such as a distributed computing framework and a network for assurance and support, and may include cloud storage and computing, an interconnection network, and the like. For example, the sensor communicates with the outside to obtain data, and the data is provided to an intelligent chip in a distributed computing system provided by the basic platform for computing.

(2) Data

Data at an upper layer of the infrastructure indicates a data source in the field of artificial intelligence. The data relates to a graph, an image, a speech, and a text, further relates to internet of things data of a conventional device, and includes service data of an existing system and perception data such as force, displacement, a liquid level, a temperature, and humidity.

(3) Data processing

Data processing usually includes data training, machine learning, deep learning, searching, inference, decision-making, and the like.

Machine learning and deep learning may mean performing symbolized and formalized intelligent information modeling, extraction, preprocessing, training, and the like on data.

Inference is a process of performing machine thinking and problem resolving by using formalized information according to an inference control strategy and by simulating a human intelligent inference manner in a computer or an intelligent system. Typical functions are searching and matching.

Decision-making is a process of making a decision after intelligent information is inferred, and usually provides functions such as classification, ranking, and prediction.

(4) General capability

After data processing mentioned above is performed on the data, some general capabilities may be further formed based on a data processing result. For example, the general capabilities may be an algorithm or a general system, for example, translation, text analysis, computer vision processing, speech recognition, and image recognition.

(5) Intelligent product and industry application

The intelligent product and industry application are products and applications of the artificial intelligence system in various fields. The intelligent product and industry application involve packaging overall artificial intelligence solutions, to productize and apply intelligent information decision-making. Application fields of the intelligent information decision-making mainly include intelligent terminals, intelligent transportation, intelligent healthcare, autonomous driving, smart cities, and the like.

The following describes several application scenarios of this application.

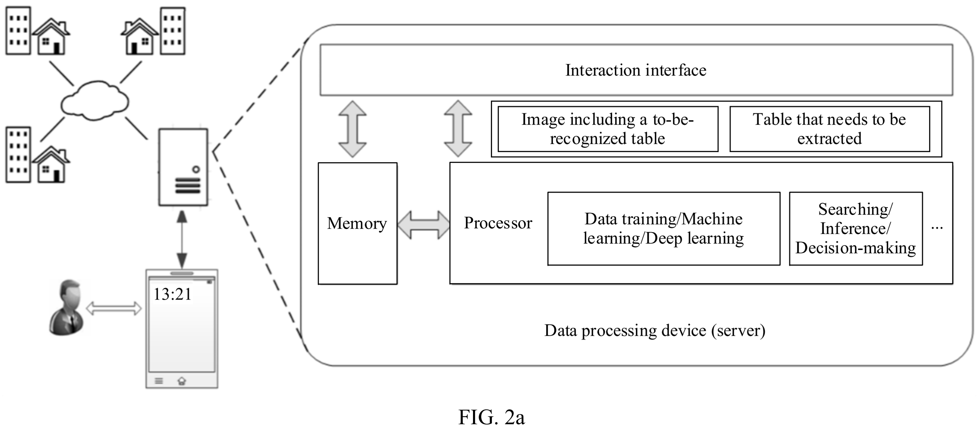

FIG. 2a is a diagram of a structure of a table recognition system according to an embodiment of this application. The table recognition system includes user equipment and a data processing device. The user equipment includes an intelligent terminal such as a mobile phone, a personal computer, or an information processing center. The user equipment is an initiator of table recognition, and serves as an initiator of a table recognition request. Generally, a user initiates the request by using the user equipment.

The data processing device may be a device or a server that has a data processing function, for example, a cloud server, a network server, an application server, or a management server. The data processing device receives the table recognition request from the intelligent terminal through an interaction interface, and then performs, by using a data storage memory and a data processing processor, table recognition processing in manners such as machine learning, deep learning, searching, inference, and decision-making. The memory in the data processing device may be a general name, and includes a local storage and a database that stores historical data. The database may be on the data processing device, or may be on another network server.

In the table recognition system shown in FIG. 2a, the user equipment may receive an instruction of the user. For example, the user may trigger/select an image that is on the user equipment and that includes a to-be-recognized table. Then, the user equipment initiates a request to the data processing device, so that the data processing device performs table recognition processing on the image on the user equipment, to obtain a table recognition result for the image, that is, the table that needs to be extracted. For example, the user may input, to the user equipment, or select, on the user equipment, an image including a to-be-recognized table, and then the user equipment initiates a table recognition request for the application to the data processing device, so that the data processing device performs table recognition processing on the image, to obtain a table recognition result for the image, that is, the table extracted from the image.

In FIG. 2a, the data processing device may perform the table recognition method in embodiments of this application.

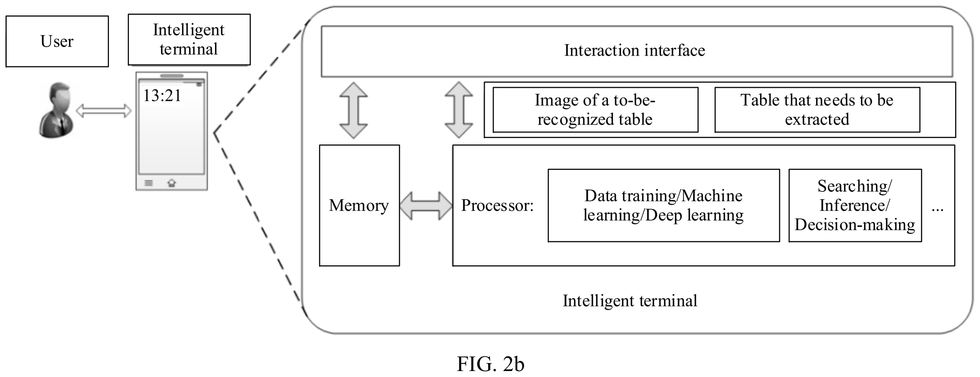

FIG. 2b is a diagram of another structure of a table recognition system according to an embodiment of this application. In FIG. 2b, user equipment directly serves as a data processing device. After the user equipment determines an application triggered/selected by a user, the user equipment can directly perform table recognition processing for the application. A specific process is similar to that in FIG. 2a. For details, refer to the foregoing descriptions. Details are not described herein again.

In the table recognition system shown in FIG. 2b, the user equipment may receive an instruction of the user. For example, the user may input, to the user equipment, or select, on the user equipment, an image including a to-be-recognized table. Then, the user equipment may perform table recognition processing on the image, to obtain a table recognition result for the image, that is, the table extracted from the image.

In FIG. 2b, the user equipment may perform the table recognition method in embodiments of this application.

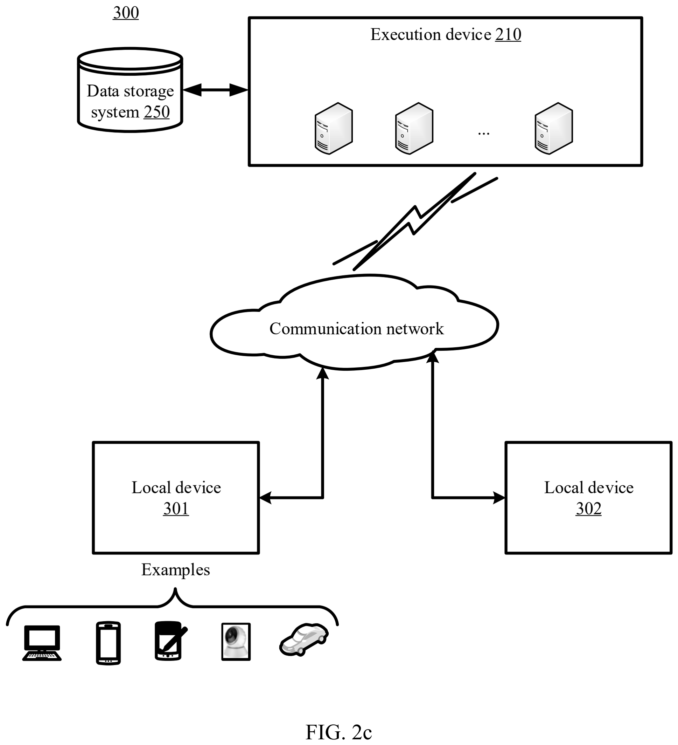

FIG. 2c is a diagram of a related device for table recognition according to an embodiment of this application.

The user equipment in FIG. 2a and FIG. 2b may be specifically a local device 301 or a local device 302 in FIG. 2c. The data processing device in FIG. 2a may be specifically an execution device 210 in FIG. 2c. A data storage system 250 may store to-be-processed data of the execution device 210. The data storage system 250 may be integrated into the execution device 210, or may be disposed on a cloud or another network server.

The processor in FIG. 2a and FIG. 2b may perform data training/machine learning/deep learning by using a neural network model or another model (for example, a model based on a support vector machine), and perform table recognition processing on an image by using a model obtained through final data training or learning, to obtain a corresponding processing result.

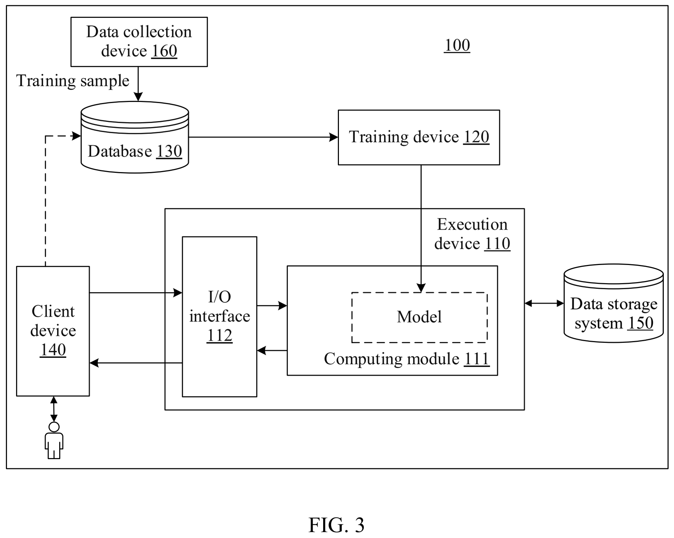

FIG. 3 is a diagram of an architecture of a system 100 according to an embodiment of this application. In FIG. 3, an execution device 110 is configured with an input/output (input/output, I/O) interface 112, configured to exchange data with an external device. A user may input data to the I/O interface 112 by using a client device 140. In this embodiment of this application, the input data may include each to-be-scheduled task, a resource that can be invoked, and another parameter.

In a process in which the execution device 110 preprocesses the input data, or in a process in which a computing module 111 of the execution device 110 performs related processing such as computing (for example, implements a function of a neural network in this application), the execution device 110 may invoke data, code, and the like in a data storage system 150 for corresponding processing, and may further store, in the data storage system 150, data, an instruction, and the like that are obtained through corresponding processing.

Finally, the I/O interface 112 returns a processing result to the client device 140, to provide the processing result to the user.

It should be noted that, for different objectives or different tasks, a training device 120 may generate corresponding target models/rules based on different training data. The corresponding target models/rules may be used to achieve the foregoing objectives or complete the foregoing tasks, to provide a required result to the user. The training data may be stored in a database 130, and is from a training sample collected by a data collection device 160.

In a case shown in FIG. 3, the user may manually provide input data, and the manually providing may be performed by using an interface provided by the I/O interface 112. In another case, the client device 140 may automatically send input data to the I/O interface 112. If the client device 140 needs to obtain authorization from the user to automatically send the input data, the user may set corresponding permission in the client device 140. The user may view, on the client device 140, a result output by the execution device 110. The result may be specifically presented in a specific manner of displaying, a sound, an action, or the like. The client device 140 may alternatively serve as a data collection end, to collect, as new sample data, input data input to the I/O interface 112 and an output result output from the I/O interface 112 that are shown in the figure, and store the new sample data in the database 130. Certainly, the client device 140 may alternatively not perform collection. Instead, the I/O interface 112 directly stores, in the database 130 as new sample data, the input data input to the I/O interface 112 and the output result output from the I/O interface 112 that are shown in the figure.

It should be noted that FIG. 3 is merely a diagram of a system architecture according to an embodiment of this application. A location relationship between the devices, the components, the modules, and the like shown in the figure does not constitute any limitation. For example, in FIG. 3, the data storage system 150 is an external memory relative to the execution device 110, but in another case, the data storage system 150 may alternatively be disposed in the execution device 110. As shown in FIG. 3, a neural network may be obtained through training based on the training device 120.

An embodiment of this application further provides a chip. The chip includes a neural network processing unit NPU. The chip may be disposed in the execution device 110 shown in FIG. 3, to complete computing work of the computing module 111. The chip may alternatively be disposed in the training device 120 shown in FIG. 3, to complete training work of the training device 120 and output a target model/rule.

The neural network processing unit NPU is mounted to a host central processing unit (central processing unit, CPU) (host CPU) as a coprocessor. The host CPU assigns a task. A core part of the NPU is an operation circuit, and a controller controls the operation circuit to extract data in a memory (a weight memory or an input memory) and perform an operation.

In some implementations, the operation circuit includes a plurality of process engines (process engines, PEs) inside. In some implementations, the operation circuit is a two-dimensional systolic array. The operation circuit may alternatively be a one-dimensional systolic array or another electronic circuit that can perform mathematical operations such as multiplication and addition. In some implementations, the operation circuit is a general-purpose matrix processor.

For example, it is assumed that there is an input matrix A, a weight matrix B, and an output matrix C. The operation circuit fetches data corresponding to the matrix B from the weight memory, and buffers the data on each PE in the operation circuit. The operation circuit fetches data of the matrix A from the input memory, to perform a matrix operation on the matrix B, and stores an obtained partial result or an obtained final result of the matrix in an accumulator (accumulator).

A vector calculation unit may perform further processing such as vector multiplication, vector addition, an exponent operation, a logarithm operation, or value comparison on an output of the operation circuit. For example, the vector calculation unit may be used for network calculation at a non-convolutional/non-FC layer in a neural network, such as pooling (pooling), batch normalization (batch normalization), or local response normalization (local response normalization).

In some implementations, the vector calculation unit can store a processed output vector in a unified cache. For example, the vector calculation unit may apply a nonlinear function to an output of the operation circuit, for example, a vector of an accumulated value, to generate an activation value. In some implementations, the vector calculation unit generates a normalized value, a combined value, or both a normalized value and a combined value. In some implementations, the processed output vector can be used as an activation input to the operation circuit, for example, to be used at a subsequent layer of the neural network.

A unified memory is configured to store input data and output data.

For weight data, a direct memory access controller (direct memory access controller, DMAC) directly transfers input data in an external memory to the input memory and/or the unified memory, stores, in the weight memory, weight data in the external memory, and stores, in the external memory, data in the unified memory.

A bus interface unit (bus interface unit, BIU) is configured to implement interaction between the host CPU, the DMAC, and an instruction fetch buffer through a bus.

The instruction fetch buffer (instruction fetch buffer) connected to the controller is configured to store instructions used by the controller.

The controller is configured to invoke the instructions buffered in the instruction fetch buffer, to control a working process of an operation accelerator.

Generally, the unified memory, the input memory, the weight memory, and the instruction fetch buffer are all on-chip (On-Chip) memories. The external memory is a memory outside the NPU. The external memory may be a double data rate synchronous dynamic random access memory (double data rate synchronous dynamic random access memory, DDR SDRAM), a high bandwidth memory (high bandwidth memory, HBM), or another readable and writable memory.

Embodiments of this application relate to massive application of a neural network. Therefore, for ease of understanding, the following first describes related terms and related concepts such as the neural network in embodiments of this application.

(1) Neural network

The neural network may include a neuron. The neuron may be an operation unit that uses xs and an intercept of 1 as an input. An output of the operation unit may be as follows:

$$h_{W,b}\left(x\right) = f\left(W^T x\right) = f\left(\sum\nolimits_{s=1}^{n} W_s x_s + b\right) \qquad (1)$$

s=1, 2, ..., or n, n is a natural number greater than 1, Ws is a weight of xs, and b is a bias of the neuron. f is an activation function (activation function) of the neuron, and is used to introduce a nonlinear characteristic into the neural network, to convert an input signal in the neuron into an output signal. The output signal of the activation function may be used as an input of a next convolutional layer. The activation function may be a sigmoid function. The neural network is a network formed by linking many single neurons together. To be specific, an output of a neuron may be an input of another neuron. An input of each neuron may be connected to a local receptive field of a previous layer to extract a feature of the local receptive field. The local receptive field may be a region including several neurons.

Work at each layer of the neural network may be described by using a mathematical expression $y = a(Wx + b)$. From a physical aspect, work at each layer of the neural network may be understood as completing transformation from input space to output space (that is, from row space to column space of a matrix) through five operations on the input space (a set of input vectors). The five operations include: 1. dimension increasing/dimension reduction; 2. scaling up/scaling down; 3. rotation; 4. translation; and 5. "bending". The operation 1, the operation 2, and the operation 3 are completed by $Wx$, the operation 4 is completed by $+b$, and the operation 5 is completed by $a()$. The word "space" is used herein for expression because a classified object is not a single thing, but a type of thing. Space is a set of all individuals of this type of thing. W is a weight vector, and each value in the vector indicates a weight value of one neuron at this layer of the neural network. The vector W determines space transformation from the input space to the output space described above. In other words, a weight W at each layer controls how to transform space. A purpose of training the neural network is to finally obtain a weight matrix (a weight matrix formed by vectors W at a plurality of layers) at all layers of a trained neural network. Therefore, a training process of the neural network is essentially learning a manner of controlling space transformation, and more specifically, learning a weight matrix.

Because it is expected that an output of the neural network is as close as possible to a predicted value that is actually desired, a current predicted value of the network may be compared with a target value that is actually desired, and then a weight vector at each layer of the neural network is updated based on a difference between the current predicted value and the target value (certainly, there is usually an initialization process before the first update, that is, a parameter is preconfigured for each layer of the neural network). For example, if the predicted value of the network is high, the weight vector is adjusted to lower the predicted value, and adjustment is continuously performed until the neural network can predict the target value that is actually desired. Therefore, "how to obtain, through comparison, a difference between the predicted value and the target value" needs to be predefined. This is a loss function (loss function) or an objective function (objective function). The loss function and the objective function are important equations used to measure the difference between the predicted value and the target value. The loss function is used as an example. A higher output value (loss) of the loss function indicates a larger difference. Therefore, training of the neural network is a process of minimizing the loss.

(2) Back propagation algorithm

In a training process, a neural network may correct a value of a parameter of an initial neural network model by using an error back propagation (back propagation, BP) algorithm, so that a reconstruction error loss of the neural network model becomes increasingly small. Specifically, an input signal is forward transferred until an error loss is generated in an output, and the parameter of the initial neural network model is updated through back propagation of information about the error loss, to converge the error loss. The back propagation algorithm is an errorloss-centered back propagation motion intended to obtain a parameter, such as a weight matrix, of an optimal neural network model.

The following describes the method provided in this application from a training side of the neural network and an application side of the neural network.

A model training method provided in embodiments of this application relates to data sequence processing, and may be specifically applied to methods such as data training, machine learning, and deep learning, to perform symbolized and formalized intelligent information modeling, extraction, preprocessing, training, and the like on training data (for example, a first image, a second image, and a third image in the model training method provided in embodiments of this application), and finally obtain a trained neural network (for example, a target model in the model training method provided in embodiments of this application). In addition, in the table recognition method provided in embodiments of this application, the foregoing trained neural network may be used, and input data (for example, a target image in the table recognition method provided in embodiments of this application) is input to the trained neural network, to obtain output data (for example, a table in the table recognition method provided in embodiments of this application). It should be noted that the model training method and the table recognition method provided in embodiments of this application are invented based on a same concept, and may also be understood as two parts of a system, or two stages of an overall procedure, for example, a model training stage and a model application stage.

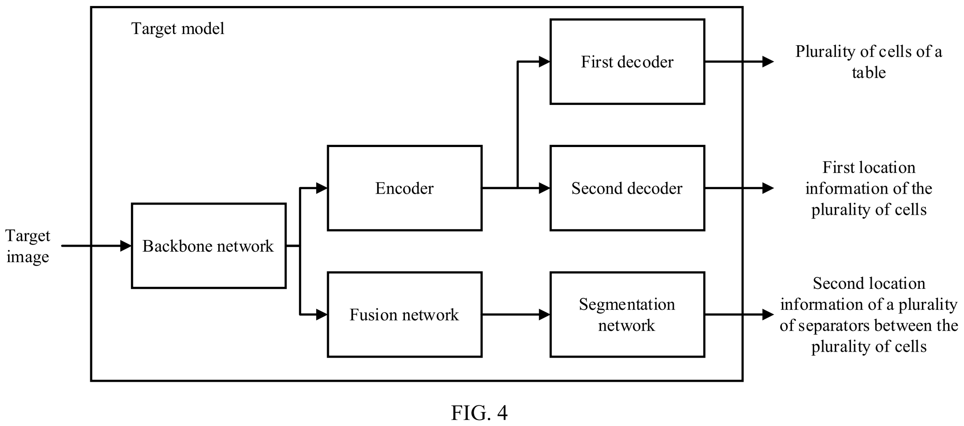

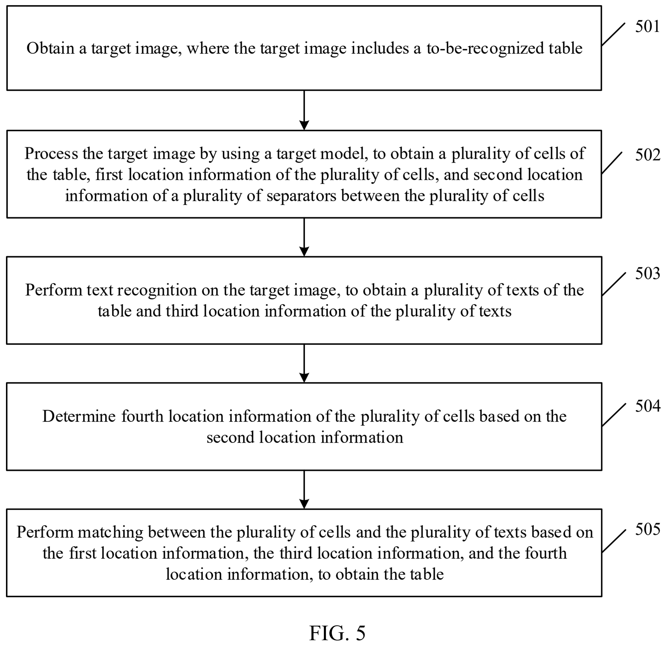

The table recognition method provided in embodiments of this application may be implemented by using a target model. FIG. 4 is a diagram of a structure of a target model according to an embodiment of this application. As shown in FIG. 4, the target model includes a plurality of modules such as a backbone network, an encoder, a first decoder, a second decoder, a fusion network, and a segmentation network (segmentation head). The plurality of modules are all trained modules. An input end of the backbone network is an input end of the entire target model. An output end of the backbone network is separately connected to an input end of the encoder and an input end of the fusion network. An output end of the encoder is separately connected to an input end of the first decoder and an input end of the second decoder. An output end of the fusion network is connected to an input end of the segmentation network. An output end of the first decoder, an output end of the second decoder, and an output end of the segmentation network are used as an output end of the entire target model. For understanding of a working procedure of implementing table recognition based on the target model, the following further describes the working procedure with reference to FIG. 5. FIG. 5 is a schematic flowchart of a table recognition method according to an embodiment of this application. As shown in FIG. 5, the method includes the following steps.

501: Obtain a target image, where the target image includes a to-be-recognized table.

In this embodiment, when table recognition needs to be performed, the target image may be first obtained. The target image includes the to-be-recognized table. In other words, in this case, the to-be-recognized table is presented in an image form. It may be understood that, in the target image, the to-be-recognized table presented in the target image includes a plurality of cells and a plurality of texts, and each cell is filled with at least one text.

It should be noted that, for any cell of the to-be-recognized table, if the cell is filled with one line of text, the line of text may be considered as one text; or if the cell is filled with a plurality of lines of text, the plurality of lines of text may be considered as a plurality of texts (the plurality of lines of text are in a one-to-one correspondence with the plurality of texts). One line of text herein may be any one of the following: one phrase, one sentence, one word, and the like.

502: Process the target image by using a target model, to obtain the plurality of cells of the table, first location information of the plurality of cells, and second location information of a plurality of separators between the plurality of cells.

After the target image is obtained, the target image may be input to the target model, to perform a series of processing on the target image by using the target model, so as to separately obtain the plurality of cells of the to-be-recognized table, the first location information (in an image coordinate system) of the plurality of cells, and the second location information (in the image coordinate system) of the plurality of separators between the plurality of cells. The image coordinate system is constructed based on the target image. For example, a lower left vertex of the target image is used as an origin of the image coordinate system, or the like. This is not limited herein.

It should be noted that, in the plurality of cells, there is one separator between any two adjacent cells. In this case, there are a plurality of separators between the plurality of cells. In the plurality of separators, any separator may be any one of the following: a solid line, a dashed line, a color block, a blank region, and the like.

Specifically, the target model may obtain the plurality of cells of the table, the first location information of the plurality of cells, and the second location information of the plurality of separators in the following manner.

(1) After the target image is obtained, a backbone network of the target model may perform feature extraction on the target image, to obtain a visual feature of the target image, and send the visual feature of the target image to an encoder and a fusion network. It should be noted that, because the backbone network usually includes a plurality of feature extraction layers connected in series, the visual feature of the target image includes an initial visual feature of the target image, an intermediate visual feature of the target image, and a final visual feature of the target image. In the backbone network, a $1^{st}$ feature extraction layer may perform feature extraction (for example, convolution, full connection, or downsampling) on the target image, to obtain an output of the $1^{st}$ feature extraction layer (namely, the initial visual feature of the target image); a $2^{nd}$ feature extraction layer may perform feature extraction on the output of the $1^{st}$ feature extraction layer, to obtain an output of the $2^{nd}$ feature extraction layer (namely, the intermediate visual feature of the target image); a $3^{rd}$ feature extraction layer may perform feature extraction on the output of the $2^{nd}$ feature extraction layer, to obtain an output of the $3^{rd}$ feature extraction layer (namely, the intermediate visual feature of the target image); ...; and a last feature extraction layer may perform feature extraction on an output of a penultimate feature extraction layer, so that an output of the last feature extraction layer is the final visual feature of the target image. In this case, the backbone network may send the final visual feature of the target image to the encoder, and send a part of intermediate visual feature of the target image and the final visual feature of the target image to the fusion network.

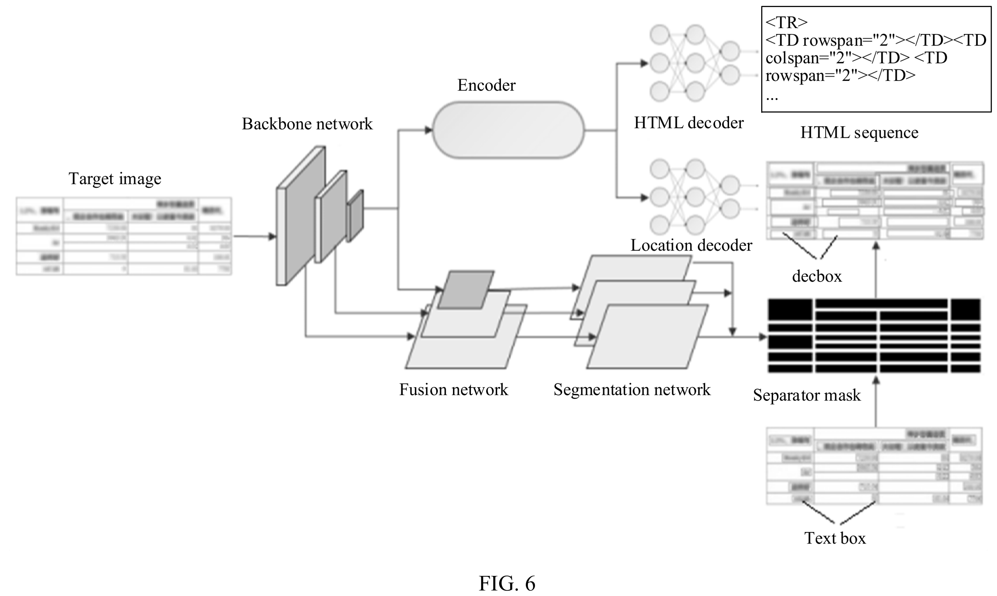

For example, as shown in FIG. 6 (FIG. 6 is a diagram of a structure of a target model according to an embodiment of this application), the target model includes a backbone network, an encoder, a hypertext markup language (hypertext markup language, HTML) decoder, a location decoder, a fusion network, and a segmentation network. It is assumed that the backbone network includes several feature extraction layers. After a target image including a table is received, the several feature extraction layers of the backbone network successively perform feature extraction on the target image. An output of a 1st feature extraction layer is an initial visual feature of the target image, an output of a 2nd feature extraction layer is an intermediate visual feature of the target image, ..., and an output of a last feature extraction layer is a final visual feature of the target image. In this case, the backbone network may send the output of the last feature extraction layer to the encoder, and send outputs of last three feature extraction layers to the fusion network.

(2) After the visual feature of the target image is obtained, the encoder may first encode the visual feature of the target image, to obtain an encoding feature of the target image, and separately send the encoding feature of the target image to a first decoder and a second decoder. It should be noted that, after the final visual feature of the target image is obtained, the encoder may encode the final visual feature of the target image, to obtain the encoding feature of the target image.

The foregoing example is still used. After the final visual feature of the target image is obtained, the encoder may encode the final visual feature of the target image, to obtain an encoding feature of the target image, and separately send the encoding feature of the target image to the HTML decoder and the location decoder.

(3) After the encoding feature of the target image is obtained, the first decoder may perform first decoding on the encoding feature of the target image, to obtain the plurality of cells of the table. It should be noted that, in this case, the plurality of cells of the table are presented in a programming language form (for example, an HTML form).

The foregoing example is still used. After the encoding feature of the target image is obtained, the HTML decoder may decode the encoding feature of the target image, to obtain an HTML sequence. The sequence may also be understood as a plurality of cells of the table that are presented in an HTML form (the sequence includes descriptions of the plurality of cells). As shown in FIG. 6, in the HTML sequence, "<TR>...</TR>" indicates a 1st entire row (the entire row includes two sub-rows and four sub-columns) in the table, "<TD rowspan="2"></TD>" indicates a cell that occupies the two sub-rows in the 1st entire row, "<TD colspan="2"></TD>" indicates a cell that occupies two sub-columns in the 1st entire row, and the like.

(4) After the encoding feature of the target image is obtained, the second decoder may perform second decoding on the encoding feature of the target image (the first decoding and the second decoding are different decoding operations), to obtain the first location information of the plurality of cells. It should be noted that, the first location information of the plurality of cells may be understood as coordinates of decoding boxes (decbox) of the plurality of cells in the image coordinate system. For any cell, a decoding box of the cell may be constructed by the second decoder based on pixels (in the target image) occupied by a boundary of the cell. Therefore, coordinates of the decoding box of the cell may be approximately understood as coordinates of the pixels occupied by the boundary of the cell. Due to performance limitation of the second decoder, there is a large difference between the two parts of coordinates. In other words, the decoding box of the cell cannot accurately coincide with the boundary of the cell, and there is a difference between the decoding box and the boundary.

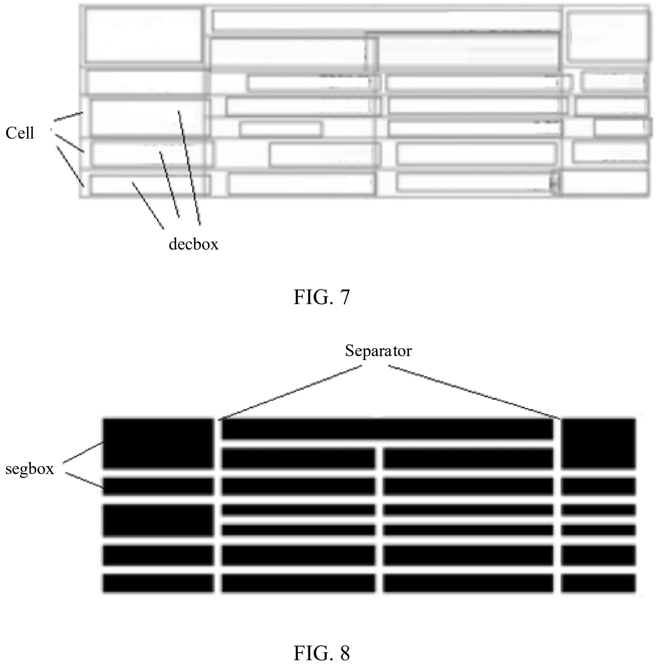

The foregoing example is still used. After the encoding feature of the target image is obtained, the location decoder may decode the encoding feature of the target image, to obtain coordinates of decboxes of the plurality of cells in an image coordinate system. An origin of the image coordinate system coincides with a lower left vertex of the target image. It can be learned from FIG. 7 (FIG. 7 is a diagram of a decoding box according to an embodiment of this application) that, after the location decoder obtains, through parsing, the coordinates of the decbox of each cell, for any cell, the coordinates of the decbox of the cell are different from coordinates of (pixels occupied by) a boundary of the cell. In other words, there is a large difference between a location of the decbox of the cell and a location of (the boundary of) the cell.

(5) After visual features of the target image are obtained, the fusion network may perform feature fusion on the visual features of the target image, to obtain a fused feature of the target image. It should be noted that, after the part of intermediate visual feature of the target image and the final visual feature of the target image are obtained, the fusion network may perform fusion (for example, addition, multiplication, or splicing) on the part of intermediate visual feature of the target image and the final visual feature of the target image, to obtain the fused feature of the target image. In this case, the fusion network may send the fused feature of the target image to a segmentation network.

The foregoing example is still used. After the outputs of the last three feature extraction layers are obtained, that is, after two parts of intermediate visual features of the target image and the final visual feature of the target image are obtained, the fusion network may perform fusion on the two parts of intermediate visual features of the target image and the final visual feature of the target image, to obtain a fused feature of the target image, and send the fused feature of the target image to the segmentation network.

(6) After the fused feature of the target image is obtained, the segmentation network may perform pixel-level classification on the fused feature of the target image (including fused features of all pixels in the target image), to classify all pixels in the target image into two parts. A first part of pixels are pixels occupied by the plurality of cells, and a second part of pixels are pixels occupied by the plurality of separators between the plurality of cells. Therefore, coordinates of the pixels (in the target image) occupied by the plurality of separators in the image coordinate system, namely, the second location information of the plurality of separators, may be obtained.

The foregoing example is still used. After the fused feature of the target image is obtained, the segmentation network may perform pixel-level classification on the fused feature of the target image, to obtain a separator mask (mask). The separator mask includes coordinates of (pixels occupied by) a plurality of separators between the plurality of cells, namely, locations of the plurality of separators.

503: Perform text recognition on the target image, to obtain the plurality of texts of the table and third location information of the plurality of texts.

After the target image is obtained, text recognition may be further directly performed on the target image, to obtain the plurality of texts of the to-be-recognized table and the third location information (in the image coordinate system) of the plurality of texts. It should be noted that, the third location information of the plurality of texts may be understood as coordinates of text boxes of the plurality of texts in the image coordinate system.

The foregoing example is still used. After the target image is obtained, OCR may be performed on the target image, to extract a plurality of texts of the table and coordinates of text boxes of the plurality of texts in the image coordinate system.

It should be understood that step 502 and step 503 are not performed in a sequence. Step 502 may be performed before step 503 or after step 503, or step 502 and step 503 may be performed simultaneously.

504: Determine fourth location information of the plurality of cells based on the second location information.

After the second location information of the plurality of separators is obtained, a series of processing may be performed on the second location information of the plurality of separators, to obtain the fourth location information (in the image coordinate system) of the plurality of cells.

Specifically, the fourth location information of the plurality of cells may be obtained in the following manner.

(1) After the second location information of the plurality of separators is obtained, because the backbone network performs an operation such as downsampling in a process of extracting the visual feature of the target image, a size of the extracted visual feature of the target image is less than a size of the original target image, and correspondingly, a size of the fused feature of the target image obtained through fusion based on the visual features of the target image is also less than the size of the target image. In this case, the second location information of the plurality of separators that is obtained based on the fused feature of the target image is also location information that is scaled down to some extent. To restore location information of the plurality of separators to conform to an actual size, the second location information of the plurality of separators may be scaled up based on a difference between the size of the target image and the size of the fused feature of the target image, to obtain scaled-up second location information of the plurality of separators. It may be understood that, the scaled-up second location information of the plurality of separators matches location information (in the image coordinate system) of the target image.

(2) After the scaled-up second location information of the plurality of separators is obtained, connected component searching and calculation based on an external rectangular box may be performed based on the scaled-up second location information of the plurality of separators, to obtain the fourth location information of the plurality of cells. It should be noted that, the fourth location information of the plurality of cells may be understood as coordinates of segmentation boxes (segbox) of the plurality of cells in the image coordinate system. For any cell, a segmentation box of the cell may be constructed based on pixels occupied by several (for example, four) separators around the cell. Therefore, coordinates of the segmentation box of the cell may be substantially equivalent to coordinates of the pixels occupied by the several separators around the cell. There is a small difference between the two parts of coordinates. In other words, the segmentation box of the cell may substantially coincide with a boundary of the cell, and there is substantially no difference between the segmentation box and the boundary.

The foregoing example is still used. After the coordinates of the plurality of separators are obtained, connected component searching and calculation based on an external rectangular box may be performed on the coordinates of the plurality of separators, to obtain coordinates of segboxes of the plurality of cells in the image coordinate system (in this process, a cell whose area is less than a preset threshold may alternatively be removed). It can be learned from FIG. 8 (FIG. 8 is a diagram of a segmentation box according to an embodiment of this application) that, after the coordinates of the segbox of each cell are obtained through parsing, for any cell, the coordinates of the segbox of the cell are almost the same as coordinates of (pixels occupied by) a boundary of the cell. In other words, there is almost no difference between a location of the segbox of the cell and a location of (the boundary of) the cell.

505: Perform matching between the plurality of cells and the plurality of texts based on the first location information, the third location information, and the fourth location information, to obtain the table.

After the first location information of the plurality of cells, the third location information of the plurality of texts, and the fourth location information of the plurality of cells are obtained, comprehensive processing may be performed on the first location information of the plurality of cells, the third location information of the plurality of texts, and the fourth location information of the plurality of cells, to complete matching between the plurality of cells and the plurality of texts, so as to merge the plurality of cells and the plurality of texts into the required table. So far, table recognition is completed.

Specifically, the required table may be obtained in the following manner.

(1) Because outputs of the first decoder and the second decoder are parallel, that is, each time the first decoder outputs a cell, the second decoder outputs the first location information of the cell simultaneously, a first correspondence between the plurality of cells and the first location information of the plurality of cells may be directly obtained. The first correspondence may also be understood as a correspondence between the plurality of cells and the plurality of decoding boxes. Similarly, during text recognition, each time a text is obtained, the third location information of the text is also obtained. Therefore, a second correspondence between the plurality of texts and the third location information may be directly obtained. The second correspondence may also be understood as a correspondence between the plurality of texts and the plurality of text boxes.

The foregoing example is still used. Each time the HTML decoder outputs a cell presented in the HTML form, the location encoder correspondingly outputs the coordinates of the decbox of the cell. In this case, the plurality of cells output by the HTML decoder correspond to the coordinates of the plurality of decboxes of the plurality of cells output by the location encoder. This is equivalent to obtaining a correspondence between the plurality of cells and the plurality of decboxes.

Similarly, during OCR, each time a text is obtained, the coordinates of the text box of the text are correspondingly obtained. In this case, the finally obtained plurality of texts correspond to the obtained coordinates of the plurality of text boxes of the plurality of texts. This is equivalent to obtaining a correspondence between the plurality of texts and the plurality of text boxes.

(2) Further, first matching (for example, center matching) may be performed between the fourth location information of the plurality of cells and the third location information of the plurality of texts, to obtain a third correspondence between the fourth location information of the plurality of cells and the third location information of the plurality of texts. The third correspondence may also be understood as a correspondence between the plurality of text boxes and the plurality of segmentation boxes.

The foregoing example is still used. Center matching may be performed between the coordinates of the plurality of segboxes and the coordinates of the plurality of text boxes, to obtain a correspondence between the plurality of segboxes and the plurality of text boxes.

(3) Further, second matching (for example, Hungarian matching) may be performed between the fourth location information of the plurality of cells and the first location information of the plurality of cells, to obtain a fourth correspondence between the fourth location information of the plurality of cells and the first location information of the plurality of cells. The fourth correspondence may also be understood as a correspondence between the plurality of decoding boxes and the plurality of segmentation boxes.

The foregoing example is still used. Hungarian matching may be performed between the coordinates of the plurality of segboxes and the coordinates of the plurality of decboxes, to obtain a correspondence between the plurality of segboxes and the plurality of decboxes.

(4) The first correspondence, the second correspondence, the third correspondence, and the fourth correspondence are all known, the first correspondence is a correspondence between the plurality of cells and the plurality of decoding boxes, the second correspondence is a correspondence between the plurality of texts and the plurality of text boxes, the third correspondence is a correspondence between the plurality of text boxes and the plurality of segmentation boxes, and the fourth correspondence is a correspondence between the plurality of decoding boxes and the plurality of segmentation boxes. Therefore, the four groups of correspondences may be integrated, to finally obtain a correspondence between the plurality of cells and the plurality of texts (the plurality of texts→the plurality of text boxes→the plurality of segmentation boxes→the plurality of decoding boxes→the plurality of cells), and the plurality of cells may be accurately filled with the plurality of texts based on the correspondence, to obtain the required table. It should be noted that, in this case, the obtained table is a table presented in the HTML form, the table may be converted into a table presented in an excel form, and the table presented in the excel form is directly provided to a user for viewing and use.

The foregoing example is still used. After the plurality of segboxes successfully correspond to the plurality of text boxes, and the plurality of segboxes successfully correspond to the plurality of decboxes, this is equivalent to that the plurality of text boxes correspond to the plurality of decboxes, and further equivalent to that the plurality of texts correspond to the plurality of cells (because the plurality of cells already correspond to the plurality of decboxes, and the plurality of segboxes already correspond to the plurality of text boxes). Therefore, the plurality of cells may be correspondingly filled with the plurality of texts, to obtain a table presented in an HTML format, and convert the table into a table presented in an excel form.

In addition, the table recognition method provided in this embodiment of this application may be further compared with a table recognition method provided in a related technology. A comparison result is shown in Table 1.

Table 1

| Method | Related technology 1 | Related technology 2 | Related technology 3 | Related technology 4 | This embodiment of this application |
|---|---|---|---|---|---|
| Indicator 1 | 96.75 | 97.23 | 97.10 | 97.20 | 97.47 |

It can be learned from Table 1 that the table recognition method provided in this embodiment of this application exhibits better performance.

In this embodiment of this application, when table recognition needs to be performed, the target image including the to-be-recognized table may be first obtained. After the target image is obtained, the target image may be input to the target model, to process the target image by using the target model, so as to separately obtain the plurality of cells of the table, the first location information of the plurality of cells, and the second location information of the plurality of separators between the plurality of cells. After the target image is obtained, text recognition may be further performed on the target image, to obtain the plurality of texts of the table and the third location information of the plurality of texts. Then, the fourth location information of the plurality of cells may be determined based on the second location information of the plurality of separators. Finally, the first location information of the plurality of cells, the third location information of the plurality of texts, and the fourth location information of the plurality of cells may be comprehensively considered, to complete matching between the plurality of cells and the plurality of texts, so as to obtain the required table. In the foregoing process, the target model includes the first location information of the plurality of cells and the third location information of the plurality of separators between the plurality of cells, and the fourth location information of the plurality of cells is calculated based on the third location information of the plurality of separators. During table recognition, the first location information of the plurality of cells that is output by the model is considered, and the fourth location information of the plurality of cells that is obtained through calculation is also considered. Considered factors are comprehensive, and even if the first location information of the plurality of cells is insufficiently accurate, the fourth location information of the plurality of cells is sufficiently accurate (because impact of the separators between the cells is considered). In this way, matching between the plurality of cells and the plurality of texts can be correctly completed, to obtain a correct table and improve user experience.

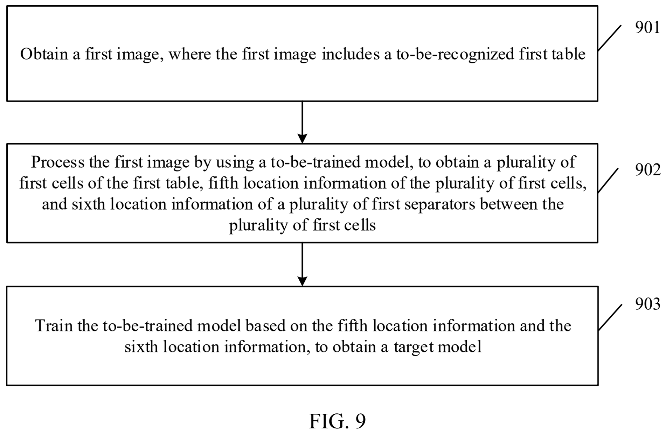

The foregoing describes in detail the table recognition method provided in embodiments of this application. The following describes the model training method provided in embodiments of this application. FIG. 9 is a schematic flowchart of a model training method according to an embodiment of this application. As shown in FIG. 9, the method includes the following steps.

901: Obtain a first image, where the first image includes a to-be-recognized first table.

In this embodiment, when a to-be-trained model needs to be trained, a batch of training data may be first obtained. The batch of training data includes the first image, and the first image includes the to-be-recognized first table. It should be noted that, for the first image, the following is known: a real HTML sequence (including real descriptions of a plurality of first cells of the first table) corresponding to the first table, real location information of the plurality of first cells of the first table, and real location information of a plurality of first separators between the plurality of first cells.

902: Process the first image by using the to-be-trained model, to obtain the plurality of first cells of the first table, fifth location information of the plurality of first cells, and sixth location information of the plurality of first separators between the plurality of first cells.

After the first image is obtained, the first image may be input to the to-be-trained model, to process the first image by using the to-be-trained model, so as to obtain a (predicted) HTML sequence (which includes predicted descriptions of the plurality of first cells, and may also be understood as the plurality of first cells obtained by the model through prediction) corresponding to the first table, the fifth location information of the plurality of first cells (which may also be referred to as predicted location information of the plurality of first cells), and the sixth location information of the plurality of first separators (which may also be referred to as predicted location information of the plurality of first separators) between the plurality of first cells.

In a possible implementation, processing the first image by using the to-be-trained model, to obtain the plurality of first cells of the first table includes: performing feature extraction on the first image by using the to-be-trained model, to obtain a visual feature of the first image; and performing encoding and first decoding on the visual feature of the first image by using the to-be-trained model, to obtain the plurality of first cells of the first table.

In a possible implementation, processing the first image by using the to-be-trained model, to obtain the fifth location information of the plurality of first cells includes: performing encoding and second decoding on the visual feature of the first image by using the to-be-trained model, to obtain the fifth location information of the plurality of first cells.

In a possible implementation, processing the first image by using the to-be-trained model, to obtain the sixth location information of the plurality of first separators between the plurality of first cells includes: performing feature fusion on visual features of the first image by using the to-be-trained model, to obtain a fused feature of the first image; and performing classification on the fused feature of the first image by using the to-be-trained model, to obtain the sixth location information of the plurality of first separators between the plurality of first cells.

For descriptions of step 902, refer to related descriptions of step 502 in the embodiment shown in FIG. 5. Details are not described herein again.

903: Train the to-be-trained model based on the fifth location information and the sixth location information, to obtain a target model.

After the HTML sequence corresponding to the first table, the fifth location information of the plurality of first cells, and the sixth location information of the plurality of first separators are obtained, because the real HTML sequence corresponding to the first table, the real location information of the plurality of first cells, and the real location information of the plurality of first separators are known, a preset first loss function may be used to perform calculation on the HTML sequence corresponding to the first table, the fifth location information of the plurality of first cells, the sixth location information of the plurality of first separators, the real HTML sequence corresponding to the first table, the real location information of the plurality of first cells, and the real location information of the plurality of first separators, to obtain a first loss. The first loss indicates a difference between the HTML sequence corresponding to the first table and the real HTML sequence corresponding to the first table, a difference between the fifth location information of the plurality of first cells and the real location information of the plurality of first cells, and a difference between the sixth location information of the plurality of first separators and the real location information of the plurality of first separators.

After the first loss is obtained, a parameter of the to-be-trained model may be updated based on the first loss, to obtain a to-be-trained model with an updated parameter, and continue to train the to-be-trained model with the updated parameter by using a next batch of training data, until a model training condition is met (for example, the first loss converges), so as to obtain the target model in the embodiment shown in FIG. 5.

Further, before step 901 to step 903 are performed, the to-be-trained model may be first constructed. The to-be-trained model may be constructed in a plurality of manners (a segmentation pre-training manner and a self-supervised pre-training manner).

> (1) When the to-be-trained model needs to be obtained, a batch of training data may be first obtained. The batch of training data includes a second image, and the second image includes a to-be-recognized second table. It should be noted that, for the second image, real location information of a plurality of second separators between a plurality of second cells of the second table is known.

After the second image is obtained, the second image may be input to a to-be-trained backbone network and a to-be-trained segmentation network, to process the second image by using the to-be-trained backbone network and the to-be-trained segmentation network, so as to obtain seventh location information of the plurality of second separators (which may also be referred to as predicted location information of the plurality of second separators) between the plurality of second cells of the second table.

After the seventh location information of the plurality of second separators is obtained, because the real location information of the plurality of second separators is known, a preset second loss function may be used to perform calculation on the seventh location information of the plurality of second separators and the real location information of the plurality of second separators, to obtain a second loss. The second loss indicates a difference between the seventh location information of the plurality of second separators and the real location information of the plurality of second separators.

After the second loss is obtained, a parameter of the to-be-trained backbone network may be updated based on the second loss, to obtain a backbone network with an updated parameter, and continue to train the backbone network with the updated parameter by using a next batch of training data, until a model training condition is met (for example, the second loss converges), so as to obtain a pre-trained backbone network.

After the pre-trained backbone network is obtained, the to-be-trained model may be constructed by using the pre-trained backbone network, a to-be-trained encoder, a to-be-trained first decoder, a to-be-trained second decoder, a to-be-trained fusion network, and the to-be-trained segmentation network.

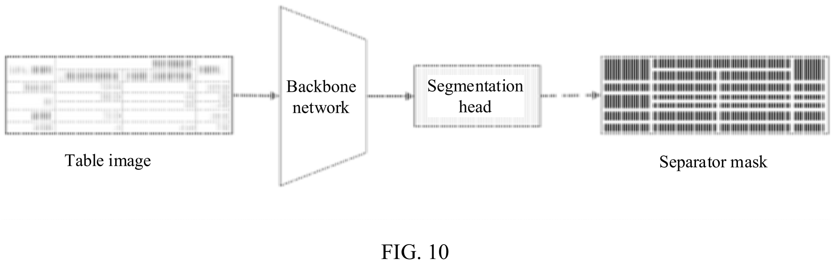

For example, as shown in FIG. 10 (FIG. 10 is a diagram of a framework of segmentation pre-training according to an embodiment of this application), a table image may be input to a to-be-trained backbone network and a to-be-trained segmentation head (segmentation network), to obtain a predicted separator mask, and then the to-be-trained backbone network is trained by using a real separator mask and the predicted separator mask, to obtain a pre-trained backbone network.

In this case, a to-be-trained model may be constructed based on the pre-trained backbone network, a to-be-trained encoder, a to-be-trained HTML decoder, a to-be-trained location decoder, a to-be-trained fusion network, and the to-be-trained segmentation head.

(2) When the to-be-trained model needs to be obtained, a batch of training data may be first obtained. The batch of training data may include a second image and a third image, the second image includes a to-be-recognized second table, and the third image includes a to-be-recognized third table. It should be noted that, the second image and the third image may be from a same image. In other words, separator enhancement (separator form conversion) may be performed on a table included in the image, to obtain the second image and the third image. In this case, the second table included in the second image and the third table included in the third image are from the table included in the image. In other words, text content included in the second table is the same as text content included in the third table. However, a separator included in the second table and a separator included in the third table are separators in different forms (certainly, the second image and the second image may alternatively be from two different images respectively, and in this case, the second table and the third table are two completely different tables).

After the second image and the third image are obtained, the second image and the third image may be input to a to-be-trained backbone network, to process the second image and the third image by using the to-be-trained backbone network, so as to obtain a visual feature of the second image and a visual feature of the third image.

The visual feature of the second image and the visual feature of the third image are obtained, and a preset third loss function may be used to perform calculation on the visual feature of the second image and the visual feature of the third image, to obtain a third loss. The third loss indicates a difference between the visual feature of the second image and the visual feature of the third image.

After the third loss is obtained, a parameter of the to-be-trained backbone network may be updated based on the third loss, to obtain a backbone network with an updated parameter, and continue to train the backbone network with the updated parameter by using a next batch of training data, until a model training condition is met (for example, the third loss converges), so as to obtain a pre-trained backbone network.

After the pre-trained backbone network is obtained, the to-be-trained model may be constructed by using the pre-trained backbone network, a to-be-trained encoder, a to-be-trained first decoder, a to-be-trained second decoder, a to-be-trained fusion network, and a to-be-trained segmentation network.

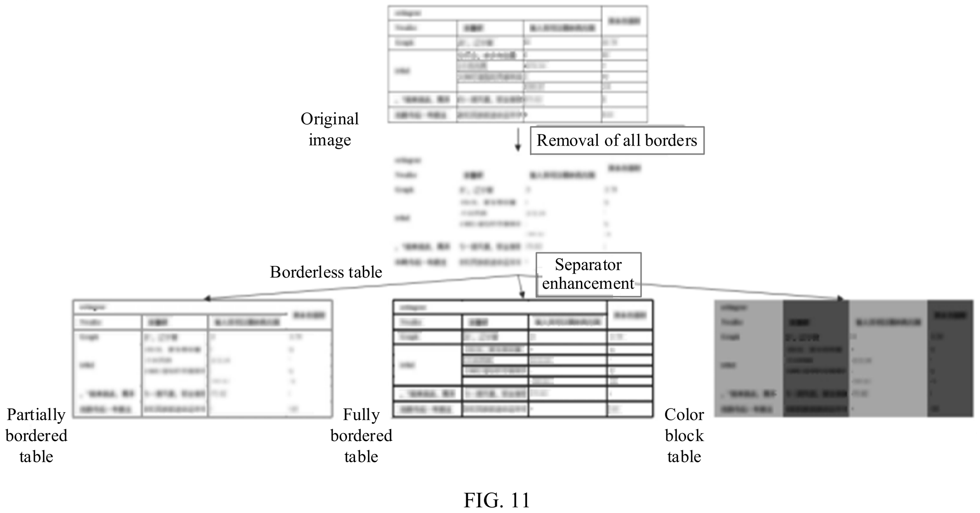

For example, as shown in FIG. 11 (FIG. 11 is a diagram of separator enhancement according to an embodiment of this application), after an original image (the original image includes a bordered table) is obtained, all borders may be removed from the table in the original image, to obtain an image of a borderless table, and then separator enhancement is performed on the image, to obtain an image of a partially bordered table, an image of a fully bordered table, and an image of a color block table.

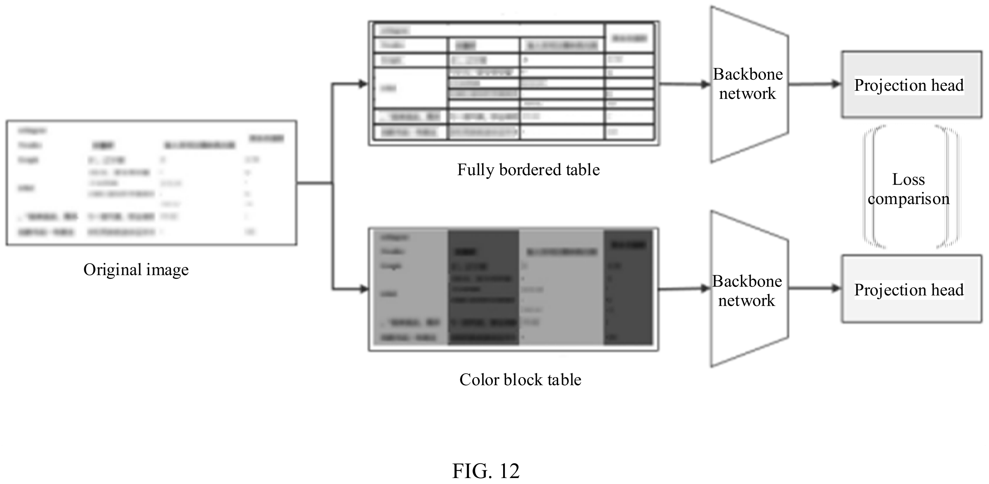

As shown in FIG. 12 (FIG. 12 is a diagram of a framework of self-supervised pre-training according to an embodiment of this application), the image of the fully bordered table and the image of the color block table may be input to a to-be-trained backbone network and a projection head, to obtain feature representations of the two images, and then the to-be-trained backbone network is trained by using the feature representations of the two images, to obtain a pre-trained backbone network.

In this case, a to-be-trained model may be constructed based on the pre-trained backbone network, a to-be-trained encoder, a to-be-trained HTML decoder, a to-be-trained location decoder, a to-be-trained fusion network, and a to-be-trained segmentation head.

In addition, the target models obtained through training (segmentation pre-training and self-supervised pre-training) in this embodiment of this application may be further compared with a model obtained through training in a related technology. Comparison results are shown in Table 2 and Table 3.

Table 2

| Settings | Baseline | Related technology | Target model obtained through segmentation pre-training | Target model obtained through self-supervised pre-training |
|---|---|---|---|---|
| Data set 1 | 93.7254 | 95.7406 | 96.3663 | 96.5273 |
| Data set 2 | 95.6014 | 97.0254 | 97.2952 | 97.8913 |
| Data set 3 | 67.7351 | 69.5116 | 74.9030 | 75.2154 |

Table 3

| Settings | Baseline | Related technology | Target model obtained through segmentation pre-training | Target model obtained through self-supervised pre-training |
|---|---|---|---|---|
| Data set 1 | 94.5336 | 94.8695 | 95.0195 | 95.4339 |
| Data set 2 | 98.4151 | 98.5288 | 98.5990 | 98.9562 |
| Data set 3 | 73.6368 | 74.2271 | 74.6686 | 75.1049 |

It can be learned from Table 2 and Table 3 that, regardless of a manner used to obtain the target model through training, performance of the target model is better than that of the model obtained through training in the related technology, and the self-supervised pre-training manner is better than the segmentation pre-training manner.

In addition, the backbone models obtained through training (segmentation pre-training and self-supervised pre-training) in this embodiment of this application may be further compared. Comparison results are shown in Table 4 and Table 5.

Table 4

| Settings | Baseline | Segmentation pre-training | Self-supervised pre-training |
|---|---|---|---|
| Data set 1 | 93.7254 | 96.0480 | 96.4825 |
| Data set 2 | 95.6014 | 96.7568 | 97.7145 |
| Data set 3 | 67.7351 | 71.5732 | 74.8981 |

Table 5

| Settings | Baseline | Segmentation pre-training | Self-supervised pre-training |
|---|---|---|---|
| Data set 1 | 94.5336 | 94.7593 | 95.3500 |
| Data set 2 | 98.4151 | 98.5635 | 98.8969 |
| Data set 3 | 73.6368 | 74.6732 | 74.9954 |

It can be learned from Table 2 and Table 3 that, the backbone network obtained in the self-supervised pre-training manner is better than the backbone network obtained in the segmentation pre-training manner.

The target model obtained through training in this embodiment of this application may be used for table recognition. Specifically, when table recognition needs to be performed, a target image including a to-be-recognized table may be first obtained. After the target image is obtained, the target image may be input to the target model, to process the target image by using the target model, so as to separately obtain a plurality of cells of the table, first location information of the plurality of cells, and second location information of a plurality of separators between the plurality of cells. After the target image is obtained, text recognition may be further performed on the target image, to obtain a plurality of texts of the table and third location information of the plurality of texts. Then, fourth location information of the plurality of cells may be determined based on the second location information of the plurality of separators. Finally, the first location information of the plurality of cells, the third location information of the plurality of texts, and the fourth location information of the plurality of cells may be comprehensively considered, to complete matching between the plurality of cells and the plurality of texts, so as to obtain the required table. In the foregoing process, the target model includes the first location information of the plurality of cells and the third location information of the plurality of separators between the plurality of cells, and the fourth location information of the plurality of cells is calculated based on the third location information of the plurality of separators. During table recognition, the first location information of the plurality of cells that is output by the model is considered, and the fourth location information of the plurality of cells that is obtained through calculation is also considered. Considered factors are comprehensive, and even if the first location information of the plurality of cells is insufficiently accurate, the fourth location information of the plurality of cells is sufficiently accurate (because impact of the separators between the cells is considered). In this way, matching between the plurality of cells and the plurality of texts can be correctly completed, to obtain a correct table and improve user experience.

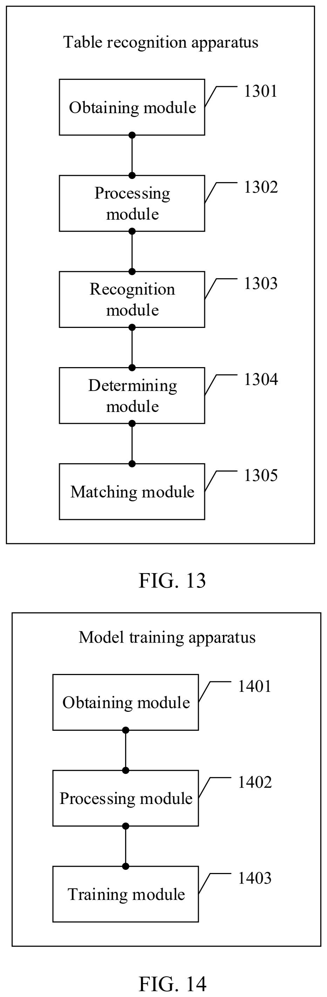

The foregoing describes in detail the table recognition method and the model training method provided in embodiments of this application. The following describes a table recognition apparatus and a model training apparatus provided in embodiments of this application. FIG. 13 is a diagram of a structure of a table recognition apparatus according to an embodiment of this application. As shown in FIG. 13, the apparatus includes:

an obtaining module 1301, configured to obtain a target image, where the target image includes a to-be-recognized table;
a processing module 1302, configured to process the target image by using a target model, to obtain a plurality of cells of the table, first location information of the plurality of cells, and second location information of a plurality of separators between the plurality of cells;
a recognition module 1303, configured to perform text recognition on the target image, to obtain a plurality of texts of the table and third location information of the plurality of texts;
a determining module 1304, configured to determine fourth location information of the plurality of cells based on the second location information; and
a matching module 1305, configured to perform matching between the plurality of cells and the plurality of texts based on the first location information, the third location information, and the fourth location information, to obtain the table.

In this embodiment of this application, when table recognition needs to be performed, the target image including the to-be-recognized table may be first obtained. After the target image is obtained, the target image may be input to the target model, to process the target image by using the target model, so as to separately obtain the plurality of cells of the table, the first location information of the plurality of cells, and the second location information of the plurality of separators between the plurality of cells. After the target image is obtained, text recognition may be further performed on the target image, to obtain the plurality of texts of the table and the third location information of the plurality of texts. Then, the fourth location information of the plurality of cells may be determined based on the second location information of the plurality of separators. Finally, the first location information of the plurality of cells, the third location information of the plurality of texts, and the fourth location information of the plurality of cells may be comprehensively considered, to complete matching between the plurality of cells and the plurality of texts, so as to obtain the required table. In the foregoing process, the target model includes the first location information of the plurality of cells and the third location information of the plurality of separators between the plurality of cells, and the fourth location information of the plurality of cells is calculated based on the third location information of the plurality of separators. During table recognition, the first location information of the plurality of cells that is output by the model is considered, and the fourth location information of the plurality of cells that is obtained through calculation is also considered. Considered factors are comprehensive, and even if the first location information of the plurality of cells is insufficiently accurate, the fourth location information of the plurality of cells is sufficiently accurate (because impact of the separators between the cells is considered). In this way, matching between the plurality of cells and the plurality of texts can be correctly completed, to obtain a correct table and improve user experience.

In a possible implementation, the processing module 1302 is configured to: perform feature extraction on the target image by using the target model, to obtain a visual feature of the target image; and perform encoding and first decoding on the visual feature of the target image by using the target model, to obtain the plurality of cells of the table.

In a possible implementation, the processing module 1302 is configured to perform encoding and second decoding on the visual feature of the target image by using the target model, to obtain the first location information of the plurality of cells.

In a possible implementation, the processing module 1302 is configured to: perform feature fusion on visual features of the target image by using the target model, to obtain a fused feature of the target image; and perform classification on the fused feature of the target image by using the target model, to obtain the second location information of the plurality of separators between the plurality of cells.

In a possible implementation, the determining module 1304 is configured to: scale up the second location information based on a difference between a size of the target image and a size of the fused feature of the target image, to obtain scaled-up second location information of the plurality of separators, where the size of the target image is greater than the size of the fused feature of the target image; and perform calculation on the scaled-up second location information, to obtain the fourth location information of the plurality of cells.

In a possible implementation, the matching module 1305 is configured to: obtain a first correspondence between the plurality of cells and the first location information and a second correspondence between the plurality of texts and the third location information; perform first matching between the fourth location information and the third location information, to obtain a third correspondence between the fourth location information and the third location information; perform second matching between the fourth location information and the first location information, to obtain a fourth correspondence between the fourth location information and the first location information; and fill the plurality of cells with the plurality of texts based on the first correspondence, the second correspondence, the third correspondence, and the fourth correspondence, to obtain the table.

In a possible implementation, the first matching is center matching, and the second matching is Hungarian matching.

FIG. 14 is a diagram of a structure of a model training apparatus according to an embodiment of this application. As shown in FIG. 14, the apparatus includes:

an obtaining module 1401, configured to obtain a first image, where the first image includes a to-be-recognized first table;
a processing module 1402, configured to process the first image by using a to-be-trained model, to obtain a plurality of first cells of the first table, fifth location information of the plurality of first cells, and sixth location information of a plurality of first separators between the plurality of first cells; and
a training module 1403, configured to train the to-be-trained model based on the fifth location information and the sixth location information, to obtain a target model.

The target model obtained through training in this embodiment of this application may be used for table recognition. Specifically, when table recognition needs to be performed, a target image including a to-be-recognized table may be first obtained. After the target image is obtained, the target image may be input to the target model, to process the target image by using the target model, so as to separately obtain a plurality of cells of the table, first location information of the plurality of cells, and second location information of a plurality of separators between the plurality of cells. After the target image is obtained, text recognition may be further performed on the target image, to obtain a plurality of texts of the table and third location information of the plurality of texts. Then, fourth location information of the plurality of cells may be determined based on the second location information of the plurality of separators. Finally, the first location information of the plurality of cells, the third location information of the plurality of texts, and the fourth location information of the plurality of cells may be comprehensively considered, to complete matching between the plurality of cells and the plurality of texts, so as to obtain the required table. In the foregoing process, the target model includes the first location information of the plurality of cells and the third location information of the plurality of separators between the plurality of cells, and the fourth location information of the plurality of cells is calculated based on the third location information of the plurality of separators. During table recognition, the first location information of the plurality of cells that is output by the model is considered, and the fourth location information of the plurality of cells that is obtained through calculation is also considered. Considered factors are comprehensive, and even if the first location information of the plurality of cells is insufficiently accurate, the fourth location information of the plurality of cells is sufficiently accurate (because impact of the separators between the cells is considered). In this way, matching between the plurality of cells and the plurality of texts can be correctly completed, to obtain a correct table and improve user experience.

In a possible implementation, the apparatus further includes: a construction module, configured to: obtain a second image, where the second image includes a to-be-recognized second table; process the second image by using a to-be-trained backbone network and a to-be-trained segmentation network, to obtain seventh location information of a plurality of second separators between a plurality of second cells of the second table; train the to-be-trained backbone network based on the seventh location information, to obtain a pre-trained backbone network; and construct the to-be-trained model based on the pre-trained backbone network and the to-be-trained segmentation network.

In a possible implementation, the apparatus further includes: a construction module, configured to: obtain a second image and a third image, where the second image includes a to-be-recognized second table, and the third image includes a to-be-recognized third table; process the second image and the third image by using a to-be-trained backbone network, to obtain a visual feature of the second image and a visual feature of the third image; train the to-be-trained backbone network based on the visual feature of the second image and the visual feature of the third image, to obtain a pre-trained backbone network; and construct the to-be-trained model based on the pre-trained backbone network.

In a possible implementation, the second image and the third image are from a same image, and the second table and the third table are from a same table.

In a possible implementation, the processing module 1402 is configured to: perform feature extraction on the first image by using the to-be-trained model, to obtain a visual feature of the first image; and perform encoding and first decoding on the visual feature of the first image by using the to-be-trained model, to obtain the plurality of first cells of the first table.

In a possible implementation, the processing module 1402 is configured to perform encoding and second decoding on the visual feature of the first image by using the to-be-trained model, to obtain the fifth location information of the plurality of first cells.

In a possible implementation, the processing module 1402 is configured to: perform feature fusion on visual features of the first image by using the to-be-trained model, to obtain a fused feature of the first image; and perform classification on the fused feature of the first image by using the to-be-trained model, to obtain the sixth location information of the plurality of first separators between the plurality of first cells.

It should be noted that, content such as information exchange between the modules/units of the apparatuses and an execution process is based on the same concept as the method embodiments of this application, and produces the same technical effects as the method embodiments of this application. For specific content, refer to the descriptions in the method embodiments in embodiments of this application. Details are not described herein again.

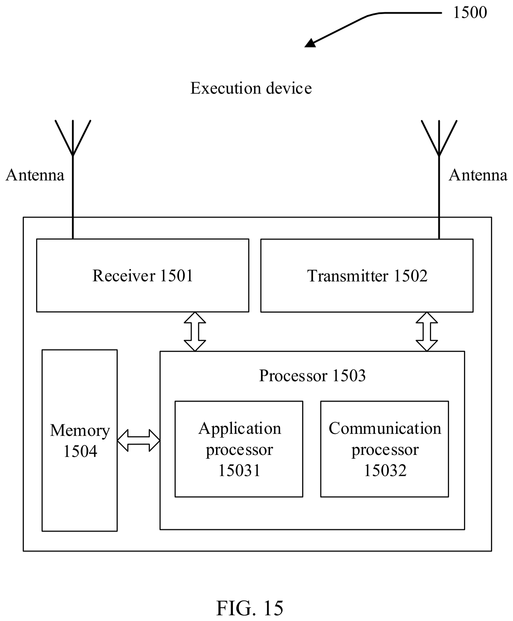

An embodiment of this application further relates to an execution device. FIG. 15 is a diagram of a structure of an execution device according to an embodiment of this application. As shown in FIG. 15, an execution device 1500 may be specifically represented as a mobile phone, a tablet computer, a notebook computer, an intelligent wearable device, a server, or the like. This is not limited herein. The table recognition apparatus described in the embodiment corresponding to FIG. 13 may be deployed on the execution device 1500, and is configured to implement a table recognition function in the embodiment corresponding to FIG. 5. Specifically, the execution device 1500 includes a receiver 1501, a transmitter 1502, a processor 1503, and a memory 1504 (there may be one or more processors 1503 in the execution device 1500, and one processor is used as an example in FIG. 15). The processor 1503 may include an application processor 15031 and a communication processor 15032. In some embodiments of this application, the receiver 1501, the transmitter 1502, the processor 1503, and the memory 1504 may be connected through a bus or in another manner.

The memory 1504 may include a read-only memory and a random access memory, and provide instructions and data to the processor 1503. A part of the memory 1504 may further include a non-volatile random access memory (non-volatile random access memory, NVRAM). The memory 1504 stores a processor and operation instructions, an executable module or a data structure, a subset thereof, or an extended set thereof. The operation instructions may include various operation instructions for implementing various operations.

The processor 1503 controls an operation of the execution device. During specific application, components of the execution device are coupled together through a bus system. In addition to a data bus, the bus system may further include a power bus, a control bus, a status signal bus, and the like. However, for clear description, various types of buses in the figure are referred to as the bus system.

The method disclosed in the foregoing embodiments of this application may be applied to the processor 1503, or implemented by the processor 1503. The processor 1503 may be an integrated circuit chip, and has a signal processing capability. In an implementation process, steps in the foregoing method may be implemented by using a hardware integrated logic circuit in the processor 1503, or by using instructions in a form of software. The processor 1503 may be a general-purpose processor, a digital signal processor (digital signal processor, DSP), a microprocessor, or a microcontroller, and may further include an application-specific integrated circuit (application-specific integrated circuit, ASIC), a field programmable gate array (field programmable gate array, FPGA) or another programmable logic device, a discrete gate or a transistor logic device, or a discrete hardware component. The processor 1503 may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 1504, and the processor 1503 reads information in the memory 1504 and completes the steps in the foregoing method in combination with hardware of the processor.

The receiver 1501 may be configured to: receive input digit or character information, and generate a signal input related to related settings and function control of the execution device. The transmitter 1502 may be configured to output digital or character information through a first interface. The transmitter 1502 may be further configured to send instructions to a disk group through the first interface, to modify data in the disk group. The transmitter 1502 may further include a display device such as a display.

In this embodiment of this application, in a case, the processor 1503 is configured to recognize a required table from a target image by using the target model in the embodiment corresponding to FIG. 5.

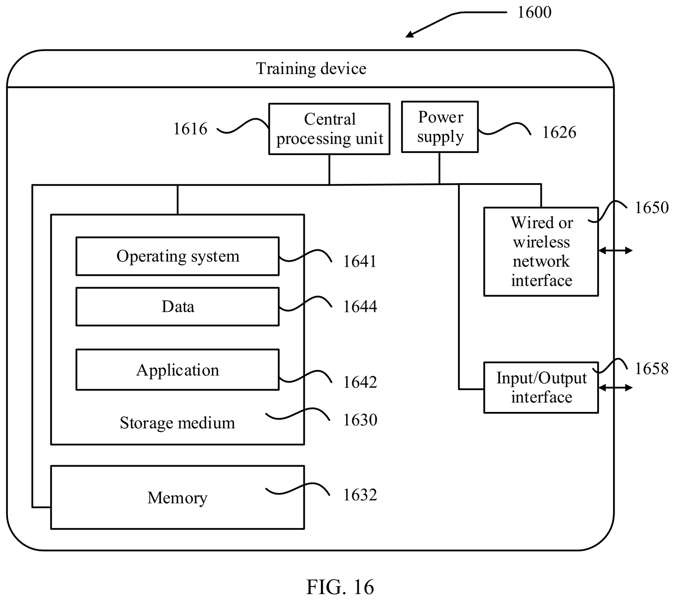

An embodiment of this application further relates to a training device. FIG. 16 is a diagram of a structure of a training device according to an embodiment of this application. As shown in FIG. 16, a training device 1600 is implemented by one or more servers. The training device 1600 may vary greatly due to different configurations or performance, and may include one or more central processing units (central processing units, CPUs) 1616 (for example, one or more processors), a memory 1632, and one or more storage media 1630 (for example, one or more mass storage devices) that store an application 1642 or data 1644. The memory 1632 and the storage medium 1630 may be transient storage or persistent storage. A program stored in the storage medium 1630 may include one or more modules (not shown in the figure), and each module may include a series of instruction operations for the training device. Further, the central processing unit 1616 may be configured to communicate with the storage medium 1630, and perform, on the training device 1600, a series of instruction operations in the storage medium 1630.

The training device 1600 may further include one or more power supplies 1626, one or more wired or wireless network interfaces 1650, one or more input/output interfaces 1658, or one or more operating systems 1641, for example, Windows Server™, Mac OS X™, Unix™, Linux™, and FreeBSD™.

Specifically, the training device may perform the model training method in the embodiment corresponding to FIG. 9, to obtain the target model.

An embodiment of this application further relates to a computer storage medium. The computer-readable storage medium stores a program used for signal processing. When the program is run on a computer, the computer is enabled to perform the steps performed by the foregoing execution device, or the computer is enabled to perform the steps performed by the foregoing training device.

An embodiment of this application further relates to a computer program product. The computer program product stores instructions. When the instructions are executed by a computer, the computer is enabled to perform the steps performed by the foregoing execution device, or the computer is enabled to perform the steps performed by the foregoing training device.

The execution device, the training device, or a terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in the execution device performs the data processing method described in the foregoing embodiments, or a chip in the training device performs the data processing method described in the foregoing embodiments. Optionally, the storage unit is a storage unit in the chip, for example, a register or a cache. Alternatively, the storage unit may be a storage unit in a wireless access device but outside the chip, for example, a read-only memory (read-only memory, ROM), another type of static storage device that can store static information and instructions, or a random access memory (random access memory, RAM).

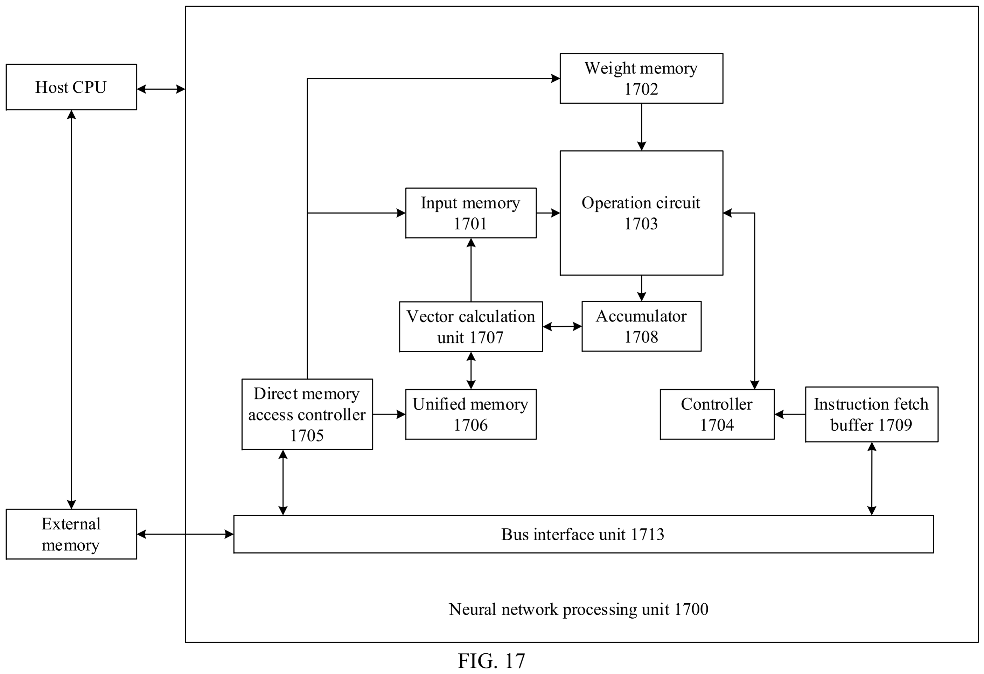

Specifically, FIG. 17 is a diagram of a structure of a chip according to an embodiment of this application. The chip may be represented as a neural network processing unit NPU 1700. The NPU 1700 is mounted to a host CPU (Host CPU) as a coprocessor. The host CPU assigns a task. A core part of the NPU is an operation circuit 1703, and a controller 1704 controls the operation circuit 1703 to extract matrix data in a memory and perform a multiplication operation.

In some implementations, the operation circuit 1703 includes a plurality of process engines (Process Engines, PEs) inside. In some implementations, the operation circuit 1703 is a two-dimensional systolic array. The operation circuit 1703 may alternatively be a one-dimensional systolic array or another electronic circuit that can perform mathematical operations such as multiplication and addition. In some implementations, the operation circuit 1703 is a general-purpose matrix processor.

For example, it is assumed that there is an input matrix A, a weight matrix B, and an output matrix C. The operation circuit fetches data corresponding to the matrix B from a weight memory 1702, and buffers the data on each PE in the operation circuit. The operation circuit fetches data of the matrix A from an input memory 1701, to perform a matrix operation on the matrix B, and stores an obtained partial result or an obtained final result of the matrix in an accumulator (accumulator) 1708.

A unified memory 1706 is configured to store input data and output data. Weight data is directly transferred to the weight memory 1702 by using a direct memory access controller (Direct Memory Access Controller, DMAC) 1705. Input data is also transferred to the unified memory 1706 by using the DMAC.

A BIU is a bus interface unit, namely, a bus interface unit 1713, and is used for interaction between an AXI bus and both the DMAC and an instruction fetch buffer (Instruction Fetch Buffer, IFB) 1709.

The bus interface unit (Bus Interface Unit, BIU) 1713 is used by the instruction fetch buffer 1709 to obtain instructions from an external memory, and is further used by the direct memory access controller 1705 to obtain original data of the input matrix A or the weight matrix B from the external memory.

The DMAC is mainly configured to transfer input data in the external memory DDR to the unified memory 1706, transfer weight data to the weight memory 1702, or transfer input data to the input memory 1701.

A vector calculation unit 1707 includes a plurality of operation processing units, and performs further processing on an output of the operation circuit 1703 if necessary, for example, vector multiplication, vector addition, an exponent operation, a logarithm operation, or value comparison. The vector calculation unit is mainly used for network calculation at a non-convolutional/fully connected layer in a neural network, such as batch normalization (batch normalization), pixel-level summation, or upsampling of a predicted label plane.

In some implementations, the vector calculation unit 1707 can store a processed output vector in the unified memory 1706. For example, the vector calculation unit 1707 may apply a linear function or a nonlinear function to the output of the operation circuit 1703, for example, perform linear interpolation on a predicted label plane extracted from a convolutional layer. For another example, the linear function or the nonlinear function is applied to a vector of an accumulated value, to generate an activation value. In some implementations, the vector calculation unit 1707 generates a normalized value, a pixel-level summation value, or both a normalized value and a pixel-level summation value. In some implementations, the processed output vector can be used as an activation input to the operation circuit 1703, for example, to be used at a subsequent layer of the neural network.

The instruction fetch buffer (instruction fetch buffer) 1709 connected to the controller 1704 is configured to store instructions used by the controller 1704.

The unified memory 1706, the input memory 1701, the weight memory 1702, and the instruction fetch buffer 1709 are all on-chip memories. The external memory is private to a hardware architecture of the NPU.

Any one of the processors mentioned above may be a general-purpose central processing unit, a microprocessor, an ASIC, or one or more integrated circuits for controlling program execution.

In addition, it should be noted that the described apparatus embodiments are merely examples. The units described as separate parts may or may not be physically separate, and parts displayed as units may or may not be physical units, may be located in one place, or may be distributed on a plurality of network units. Some or all of the modules may be selected according to an actual requirement to achieve the objectives of the solutions of embodiments. In addition, in the accompanying drawings of the apparatus embodiments provided in this application, connection relationships between modules indicate that the modules have communication connections with each other, which may be specifically implemented as one or more communication buses or signal lines.

Based on the descriptions of the foregoing implementations, a person skilled in the art may clearly understand that this application may be implemented by software in addition to necessary universal hardware, or by dedicated hardware, including an application-specific integrated circuit, a dedicated CPU, a dedicated memory, a dedicated component, and the like. Generally, any function completed by a computer program can be easily implemented by using corresponding hardware. In addition, a specific hardware structure configured to implement a same function may be in various forms, for example, in a form of analog circuit, digital circuit, or dedicated circuit. However, as for this application, software program implementation is a better implementation in most cases. Based on such an understanding, the technical solutions of this application essentially or the part contributing to the conventional technology may be implemented in a form of software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the method in embodiments of this application.

All or some of the foregoing embodiments may be implemented by using software, hardware, firmware, or any combination thereof. When software is used to implement embodiments, all or some of the embodiments may be implemented in a form of computer program product.

The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, for example, a training device or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid-State Disk, SSD)), or the like.

**Claims**

1.  A table recognition method, wherein the method comprises:

    obtaining a target image, wherein the target image comprises a to-be-recognized table;
    processing the target image by using a target model, to obtain a plurality of cells of the table, first location information of the plurality of cells, and second location information of a plurality of separators between the plurality of cells;
    performing text recognition on the target image, to obtain a plurality of texts of the table and third location information of the plurality of texts;
    determining fourth location information of the plurality of cells based on the second location information; and
    performing matching between the plurality of cells and the plurality of texts based on the first location information, the third location information, and the fourth location information, to obtain the table.

2.  The method according to claim 1, wherein processing the target image by using the target model, to obtain the plurality of cells of the table comprises:

    performing feature extraction on the target image by using the target model, to obtain a visual feature of the target image; and
    performing encoding and first decoding on the visual feature of the target image by using the target model, to obtain the plurality of cells of the table.

3.  The method according to claim 1 or 2, wherein processing the target image by using the target model, to obtain the first location information of the plurality of cells comprises:
    performing encoding and second decoding on the visual feature of the target image by using the target model, to obtain the first location information of the plurality of cells.

4.  The method according to any one of claims 1 to 3, wherein processing the target image by using the target model, to obtain the second location information of the plurality of separators between the plurality of cells comprises:

    performing feature fusion on visual features of the target image by using the target model, to obtain a fused feature of the target image; and

performing classification on the fused feature of the target image by using the target model, to obtain the second location information of the plurality of separators between the plurality of cells.

5. The method according to any one of claims 1 to 4, wherein determining the fourth location information of the plurality of cells based on the second location information comprises:

scaling up the second location information based on a difference between a size of the target image and a size of the fused feature of the target image, to obtain scaled-up second location information of the plurality of separators, wherein the size of the target image is greater than the size of the fused feature of the target image; and
performing calculation on the scaled-up second location information, to obtain the fourth location information of the plurality of cells.

6. The method according to any one of claims 1 to 5, wherein performing matching between the plurality of cells and the plurality of texts based on the first location information, the third location information, and the fourth location information, to obtain the table comprises:

obtaining a first correspondence between the plurality of cells and the first location information and a second correspondence between the plurality of texts and the third location information;
performing first matching between the fourth location information and the third location information, to obtain a third correspondence between the fourth location information and the third location information;
performing second matching between the fourth location information and the first location information, to obtain a fourth correspondence between the fourth location information and the first location information; and
filling the plurality of cells with the plurality of texts based on the first correspondence, the second correspondence, the third correspondence, and the fourth correspondence, to obtain the table.

7. The method according to claim 6, wherein the first matching is center matching, and the second matching is Hungarian matching.

8. A model training method, wherein the method comprises:

obtaining a first image, wherein the first image comprises a to-be-recognized first table;
processing the first image by using a to-be-trained model, to obtain a plurality of first cells of the first table, fifth location information of the plurality of first cells, and sixth location information of a plurality of first separators between the plurality of first cells; and
training the to-be-trained model based on the fifth location information and the sixth location information, to obtain a target model.

9. The method according to claim 8, wherein the method further comprises:

obtaining a second image, wherein the second image comprises a to-be-recognized second table;
processing the second image by using a to-be-trained backbone network and a to-be-trained segmentation network, to obtain seventh location information of a plurality of second separators between a plurality of second cells of the second table;
training the to-be-trained backbone network based on the seventh location information, to obtain a pre-trained backbone network; and
constructing the to-be-trained model based on the pre-trained backbone network and the to-be-trained segmentation network.

10. The method according to claim 8, wherein the method further comprises:

obtaining a second image and a third image, wherein the second image comprises a to-be-recognized second table, and the third image comprises a to-be-recognized third table;
processing the second image and the third image by using a to-be-trained backbone network, to obtain a visual feature of the second image and a visual feature of the third image;
training the to-be-trained backbone network based on the visual feature of the second image and the visual feature of the third image, to obtain a pre-trained backbone network; and
constructing the to-be-trained model based on the pre-trained backbone network.

11. The method according to claim 10, wherein the second image and the third image are from a same image, and the second table and the third table are from a same table.

12. The method according to any one of claims 8 to 11, wherein processing the first image by using the to-be-trained model, to obtain the plurality of first cells of the first table comprises:

   performing feature extraction on the first image by using the to-be-trained model, to obtain a visual feature of the first image; and
   performing encoding and first decoding on the visual feature of the first image by using the to-be-trained model, to obtain the plurality of first cells of the first table.

13. The method according to any one of claims 8 to 12, wherein processing the first image by using the to-be-trained model, to obtain the fifth location information of the plurality of first cells comprises:
   performing encoding and second decoding on the visual feature of the first image by using the to-be-trained model, to obtain the fifth location information of the plurality of first cells.

14. The method according to any one of claims 8 to 13, wherein processing the first image by using the to-be-trained model, to obtain the sixth location information of the plurality of first separators between the plurality of first cells comprises:

   performing feature fusion on visual features of the first image by using the to-be-trained model, to obtain a fused feature of the first image; and
   performing classification on the fused feature of the first image by using the to-be-trained model, to obtain the sixth location information of the plurality of first separators between the plurality of first cells.

15. A table recognition apparatus, wherein the apparatus comprises:

   an obtaining module, configured to obtain a target image, wherein the target image comprises a to-be-recognized table;
   a processing module, configured to process the target image by using a target model, to obtain a plurality of cells of the table, first location information of the plurality of cells, and second location information of a plurality of separators between the plurality of cells;
   a recognition module, configured to perform text recognition on the target image, to obtain a plurality of texts of the table and third location information of the plurality of texts;
   a determining module, configured to determine fourth location information of the plurality of cells based on the second location information; and
   a matching module, configured to perform matching between the plurality of cells and the plurality of texts based on the first location information, the third location information, and the fourth location information, to obtain the table.

16. A model training apparatus, wherein the apparatus comprises:

   an obtaining module, configured to obtain a first image, wherein the first image comprises a to-be-recognized first table;
   a processing module, configured to process the first image by using a to-be-trained model, to obtain a plurality of first cells of the first table, fifth location information of the plurality of first cells, and sixth location information of a plurality of first separators between the plurality of first cells; and
   a training module, configured to train the to-be-trained model based on the fifth location information and the sixth location information, to obtain a target model.

17. A table recognition apparatus, wherein the apparatus comprises a memory and a processor, the memory stores code, the processor is configured to execute the code, and when the code is executed, the table recognition apparatus performs the method according to any one of claims 1 to 14.

18. A computer storage medium, wherein the computer storage medium stores one or more instructions, and when the instructions are executed by one or more computers, the one or more computers are enabled to implement the method according to any one of claims 1 to 14.

**19.** A computer program product, wherein the computer program product stores instructions, and when the instructions are executed by a computer, the computer is enabled to implement the method according to any one of claims 1 to 14.

FIG. 1

Intelligent information chain

Intelligent product and industry application

Translation/Text analysis/... | Speech/Vision/Image/...

Data

Data processing: | Data training/Machine learning/ Deep learning | Searching/ Inference/ Decision-making | ...

Infrastructure | Sensor | Intelligent chip | Basic platform | ...

IT value chain

EP 4 715 763 A1

29

FIG. 2a

EP 4 715 763 A1

| | Interaction interface | |
|---|---|---|

| Image of a to-be-recognized table | Table that needs to be extracted |
|---|---|

| Memory | Processor: | Data training/Machine learning/Deep learning | Searching/ Inference/ Decision-making | ... |
|---|---|---|---|---|

User

Intelligent terminal

13:21

Intelligent terminal

FIG. 2b

FIG. 2c

FIG. 3

FIG. 4

Target model

Target image → Backbone network → Encoder → First decoder → Plurality of cells of a table

Encoder → Second decoder → First location information of the plurality of cells

Backbone network → Fusion network → Segmentation network → Second location information of a plurality of separators between the plurality of cells

EP 4 715 763 A1

34

Obtain a target image, where the target image includes a to-be-recognized table 501

Process the target image by using a target model, to obtain a plurality of cells of the table, first location information of the plurality of cells, and second location information of a plurality of separators between the plurality of cells 502

Perform text recognition on the target image, to obtain a plurality of texts of the table and third location information of the plurality of texts 503

Determine fourth location information of the plurality of cells based on the second location information 504

Perform matching between the plurality of cells and the plurality of texts based on the first location information, the third location information, and the fourth location information, to obtain the table 505

FIG. 5

FIG. 6

FIG. 7

FIG. 8

Obtain a first image, where the first image includes a to-be-recognized first table — 901

Process the first image by using a to-be-trained model, to obtain a plurality of first cells of the first table, fifth location information of the plurality of first cells, and sixth location information of a plurality of first separators between the plurality of first cells — 902

Train the to-be-trained model based on the fifth location information and the sixth location information, to obtain a target model — 903

FIG. 9

Table image → Backbone network → Segmentation head → Separator mask

**FIG. 10**

Original
image

Removal of all borders

Borderless table

Separator
enhancement

Partially
bordered
table

Fully
bordered
table

Color
block
table

FIG. 11

FIG. 12

Table recognition apparatus

Obtaining module — 1301

Processing module — 1302

Recognition module — 1303

Determining module — 1304

Matching module — 1305

FIG. 13

Model training apparatus

Obtaining module — 1401

Processing module — 1402

Training module — 1403

FIG. 14

1500

Execution device

Antenna                                    Antenna

| Receiver 1501 | Transmitter 1502 |

Processor 1503

| Memory 1504 | Application processor 15031 | Communication processor 15032 |

FIG. 15

1600

Training device

1616 — Central processing unit | Power supply — 1626

Operating system — 1641

Data — 1644

Application — 1642

Storage medium — 1630

Memory — 1632

Wired or wireless network interface — 1650

Input/Output interface — 1658

FIG. 16

FIG. 17

Neural network processing unit 1700

- Host CPU
- External memory
- Weight memory 1702
- Operation circuit 1703
- Accumulator 1708
- Controller 1704
- Instruction fetch buffer 1709
- Input memory 1701
- Vector calculation unit 1707
- Unified memory 1706
- Direct memory access controller 1705
- Bus interface unit 1713

## INTERNATIONAL SEARCH REPORT

| International application No. |
|---|
| **PCT/CN2024/100022** |

| **A.** | **CLASSIFICATION OF SUBJECT MATTER** |
|---|---|

G06V30/412(2022.01)i

According to International Patent Classification (IPC) or to both national classification and IPC

| **B.** | **FIELDS SEARCHED** |
|---|---|

Minimum documentation searched (classification system followed by classification symbols)

IPC：G06V

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 表格, 图像, 识别, 单元格, 文本, 位置, 坐标, 间隔, 间隙, 分隔, 模型, 训练, table, image, recognition, cell, text, position, coordinate, gap, separation, model, training

| **C.** | **DOCUMENTS CONSIDERED TO BE RELEVANT** | | |
|---|---|---|---|
| Category* | Citation of document, with indication, where appropriate, of the relevant passages | | Relevant to claim No. |
| A | CN 115100668 A (SHANGHAI SHUHUI SYSTEM TECHNOLOGY CO., LTD.) 23 September 2022 (2022-09-23)<br>description, paragraphs 0043-0126 | | 1-19 |
| A | CN 115273112 A (BEIJING KINGSOFT DIGITAL ENTERTAINMENT TECHNOLOGY CO., LTD.) 01 November 2022 (2022-11-01)<br>entire document | | 1-19 |
| A | CN 114743202 A (SHENYAN TECHNOLOGY (BEIJING) CO., LTD.) 12 July 2022 (2022-07-12)<br>entire document | | 1-19 |
| A | US 2020151444 A1 (ADOBE INC.) 14 May 2020 (2020-05-14)<br>entire document | | 1-19 |
| A | US 2021406533 A1 (THE NIELSEN COMPANY (US), LLC) 30 December 2021 (2021-12-30)<br>entire document | | 1-19 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **13 September 2024** | **20 September 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/100022**

| Patent document cited in search report | | | Publication date (day/month/year) | Patent family member(s) | | | Publication date (day/month/year) |
|---|---|---|---|---|---|---|---|
| CN | 115100668 | A | 23 September 2022 | None | | | |
| CN | 115273112 | A | 01 November 2022 | None | | | |
| CN | 114743202 | A | 12 July 2022 | None | | | |
| US | 2020151444 | A1 | 14 May 2020 | None | | | |
| US | 2021406533 | A1 | 30 December 2021 | WO | 2022006295 | A1 | 06 January 2022 |

Form PCT/ISA/210 (patent family annex) (July 2022)

**EP 4 715 763 A1**

**Patent documents cited in the description**

- CN 202310746659